# EUROPEAN PATENT SPECIFICATION

(11) **EP 1 677 443 B1**
(45) Date of publication and mention of the grant of the patent: **13.05.2009**
(21) Application number: 05028649.1
(22) Date of filing: 29.12.2005
(51) Int. Cl.: H04B 7/26, H04W 16/00

(54) **Relay communication method for an OFDMA-based cellular communication system**
Relais-Kommunikationsverfahren für ein OFDMA zellulares Kommunikationssystem
Procédé de communication à relais pour un système de communication cellulaire utilisant un accès OFDMA

(30) Priority: 29.12.2004 KR 2004115353
(43) Date of publication of application: 05.07.2006
(73) Proprietor: Samsung Electronics Co., Ltd., Suwon-si, Gyeonggi-Do (KR)
(72) Inventor: Lee, Yeon-Woo, Yeongtong-gu Suwon-si Gyeonggi-do (KR); Yun, Sang-Boh, Yeongtong-gu Suwon-si Gyeonggi-do (KR); Park, Seung-Young, Yeongtong-gu Suwon-si Gyeonggi-do (KR); Kim, Yung-Soo, Yeongtong-gu Suwon-si Gyeonggi-do (KR)
(74) Representative: Grünecker, Kinkeldey, Stockmair & Schwanhäusser Anwaltssozietät

(56) References cited:
- WO-A-20/04032540
- US-B1- 6 473 617
- KOJIMA F ET AL: "Radio resource management technique for multilayered cell system with different bandwidths" ELECTRONICS LETTERS, IEE STEVENAGE, GB, vol. 33, no. 15, 17 July 1997 (1997-07-17), pages 1297-1298, XP006007743 ISSN: 0013-5194

## Description

The present invention relates generally to a wireless communication system, and in particular, to a relay communication method for extending a service area by installing a relay station in a shaded area or a cell boundary or by using a mobile station as a relay station.

Generally, in an infrastructure wireless communication system such as a wireless local area network (W-LAN), all mobiles stations directly communicate with an access point. Various techniques using intermediate relay stations have been proposed for increasing capacity or energy efficiency of such an infrastructure system.

In this regard, International Publication Number WO 00/54539 discloses "routing in a multi-station network" by introducing the ad hoc networking concept to secure reliability and system capacity of the service area. In the multi-station network routing, a mobile station must operate in both a cellular network and an ad hoc network. More specifically, the mobile station accesses the cellular network via the ad hoc network when it cannot directly access the cellular network or there is a gain by the ad hoc network.

As another example, an integrated cellular and ad-hoc relaying system (i-CAR) has been provided for efficiently performing inter-cell traffic load balancing and channel resource sharing using an ad hoc relay station (ARS) by integrating the cellular system with the ad hoc relay technique.

In the next generation wireless communication system, a Hybrid Duplexing Technique (HDT) combined of Time Division Duplexing (TDD) and Frequency Division Duplexing (FDD) is considered as a scheme for obtaining the synergy effect in terms of performance as well as maintaining the merits of networks in an environment where different networks using different duplexing techniques coexist. However, the foregoing communication systems, which were designed without consideration of the hybrid duplexing technique, cannot be directly applied to the next generation wireless communication system. Therefore, there is a need to design a relay station-based cellular network, which takes into account a resource allocation scheme in the next generation cellular system to which the hybrid duplexing technique will be applied.

In particular, there is a demand for an efficient resource allocation account a resource allocation scheme in the next generation cellular system to which the hybrid duplexing technique will be applied.

In particular, there is a demand for an efficient resource allocation algorithm using a relay station to extend coverage of a high-speed data service and to remove shaded areas in the HDT-based next generation communication system. The efficient resource allocation algorithm is required even in the next generation communication system employing TDD.

WO 2004/032540 A1 discloses a location based method and system for wireless mobile unit communication with a base station and two mobile stations. The mobile station can convey a request for spot location information to the other mobile station located in a hot spot zone, which in turn relays the request to WLAN, which in turn transmits relocation information via the one mobile station to the other one. The second mobile station is in particular used because of obstacles, such as walls, houses, or the like, which can limit the quality of service provided by the base station.

### SUMMARY OF THE INVENTION

It is, therefore, an object of the present invention to provide a communication system and method capable of extending coverage of a high-speed data service and removing shaded areas using a relay station designed suitable for a TDD system as well as an HDT system.

It is another object of the present invention to provide a communication system and method capable of minimizing interference and maximizing system performance through sectorization-based cell design and efficient management of resources for a relay station.

To achieve the above and other objects, there is provided a relay communication method in an orthogonal frequency division multiple access (OFDMA) communication system including at least one base station for providing a multiple access service to a plurality of mobile stations frame by frame. The relay communication method includes dividing a cell defined by transmission power of the base station into a plurality of sectors on the basis of the base station; dividing the cell into an inner area surrounding said one base station where a first service is supported and into an outer area surrounding the inner area where a second service is supported, on the basis of the base station; arranging at least one relay station in the outer area of each sector; and allocating a partial resource of the frame for communication between the base station and the mobile station through the relay station.

### BRIEF DESCRIPTION OF THE DRAWINGS

The above and other objects, features, and advantages of the present invention will become more apparent from the following detailed description when taken in conjunction with the accompanying drawings in which:
FIG. 1 is a conceptual diagram illustrating an operation a relay station (RS) in a communication system according to an embodiment of the present invention;
FIG. 2 is a schematic diagram illustrating an FRS-based relay communication system according to an embodiment of the present invention;
FIG. 3 is a schematic configuration diagram of an FRS-based communication system according to an embodiment of the present invention;
FIGs. 4A and 4B are resource graphs for a description of a resource allocation scheme for the case where a base station communicates with an FRS through a wire or a separate dedicated frequency in an FRS-based communication system according to an embodiment of the present invention;
FIG. 5 is a schematic configuration diagram of an FRS-based communication system according to an embodiment of the present invention;
FIGs. 6A to 6C are resource graphs for a description of a resource allocation scheme for the case where a base station and an FRS use the same radio frequency in an FRS-based communication system according to an embodiment of the present invention;
FIG. 7 is a schematic configuration diagram of an FRS-based communication system according to an embodiment of the present invention;
FIG. 8 is a schematic configuration diagram of an FRS-based communication system with a 3-sector model according to an embodiment of the present invention;
FIG. 9 is a schematic diagram illustrating a cellular communication system using a mobile relay station (MRS) according to an embodiment of the present invention;
FIG. 10 is a schematic configuration diagram of an RS-based communication system using a 6-sector MRS fixed channel allocation scheme according to an embodiment of the present invention;
FIG. 11 is a resource graph for a description of a resource allocation scheme in an MRS-based communication system according to an embodiment of the present invention;
FIG. 12 is a resource graph for a description of a resource sharing/reuse scheme in an MRS-based communication system according to an embodiment of the present invention;
FIG. 13 is a resource graph for a description of an MRS channel reuse scheme in a 3-sector cellular communication system according to an embodiment of the present invention;
FIG. 14 is a schematic system configuration diagram for a description of an MRS fixed channel allocation scheme in a 3-sector cellular system according to an embodiment of the present invention;
FIG. 15 is a resource graph for a description of an MRS fixed channel allocation scheme in a 3-sector cellular communication system according to an embodiment of the present invention;
FIG. 16 is a resource graph for a description of an MRS fixed channel allocation scheme in a 3-sector cellular communication system according to an embodiment of the present invention;
FIG. 17 is a schematic system configuration diagram for a description of an MRS fixed channel allocation scheme in a 3-sector cellular communication system according to an embodiment of the present invention;
FIG. 18 is a resource graph for a description of an MRS fixed channel allocation scheme in a 3-sector cellular communication system according to an embodiment of the present invention;
FIG. 19 is a resource graph for a description of an MRS fixed channel allocation scheme in a 3-sector cellular communication system according to an embodiment of the present invention;
FIG. 20 is a schematic system configuration diagram for a description of another MRS fixed channel allocation scheme in a 3-sector cellular communication system according to an embodiment of the present invention;
FIG. 21 is a resource graph for a description of an MRS fixed channel allocation scheme in a 3-sector cellular communication system according to an embodiment of the present invention;
FIG. 22 is a schematic system configuration diagram of a cellular communication system according to an embodiment of the present invention;
FIG. 23 is a resource graph for a description of a resource allocation scheme in a cellular communication system according to an embodiment of the present invention; and
FIG. 24 is a resource graph for a description of a resource allocation scheme in a cellular communication system according to an embodiment of the present invention.

Several preferred embodiments of the present invention will now be described in detail herein below with reference to the annexed drawings. In the drawings, the same or similar elements are denoted by the same reference numerals even though they are depicted in different drawings. Further, in the following description, a detailed description of known functions and configurations incorporated herein has been omitted for conciseness.

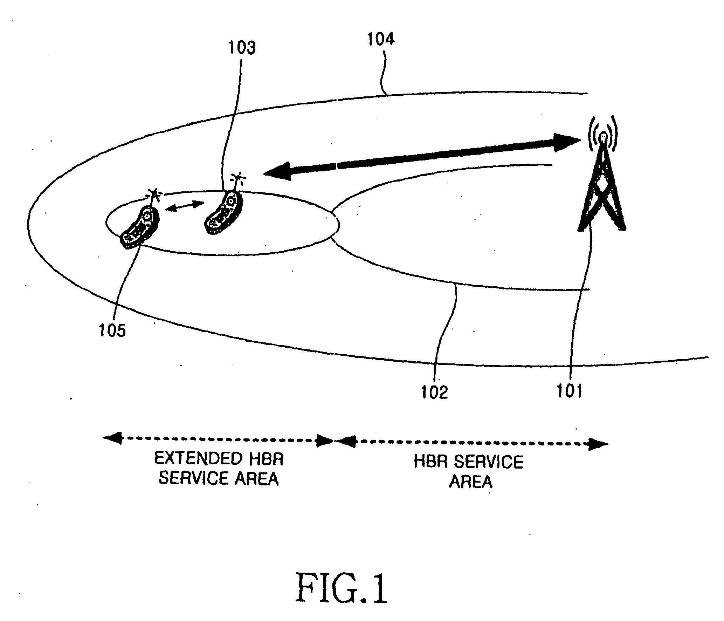

FIG. 1 is a conceptual diagram illustrating an operation of a relay station in a communication system according to an embodiment of the present invention. Referring to FIG. 1, a base station (BS) 101 has an inner area 102 supporting a low mobility and high bit rate (HBR) service and an outer area 104 supporting a high mobility and low bit rate (LBR) service. The outer area 104 is larger than the inner area 102 in radius.

In an HDT system, the base station 101 allocates broadband TDD uplink resources and downlink resources for the inner area 101, and allocates narrowband FDD uplink resources and broadband TDD downlink resources for the outer area 104. However, in a TDD system, the base station 101 allocates broadband TDD uplink resources and downlink resources for the inner area 102 and the outer area 104.

In this basic system configuration, in order to provide an HBR service to a mobile station (MS) 105 located in the outer area 104, a relay station 103 extends an HBR service area limited to the inner area 102 up to the outer area 104. The relay station 103 can be implemented with a fixed relay station (FRS) or a mobile relay station (MRS).

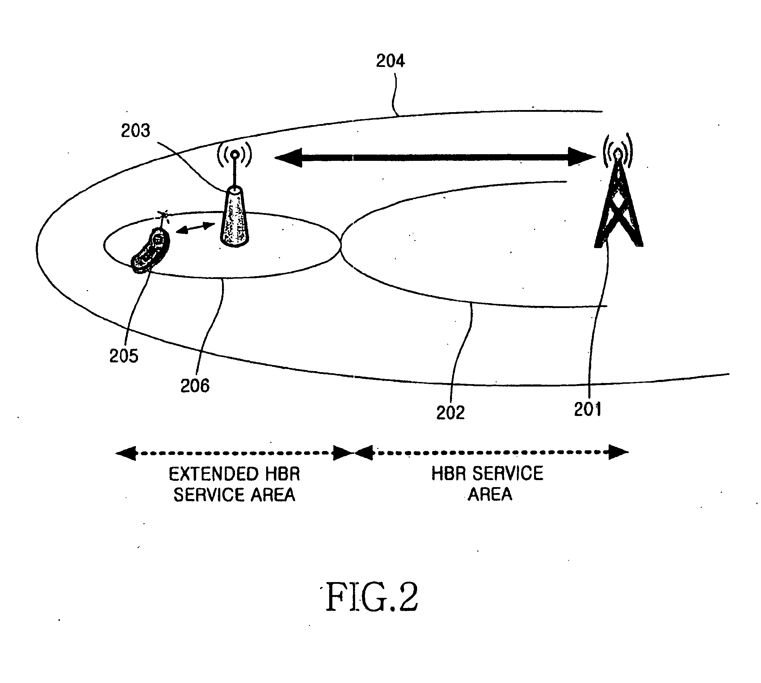

FIG. 2 is a schematic diagram illustrating an FRS-based relay communication system according to an embodiment of the present invention, wherein a base station 201 defines an HBR area 202 with a small radius, an LBR area 204 with a large radius, and the LBR area 204 has a hot spot 206 in which an FRS 203 is installed. The FRS 203 communicates with the base station 201 through a wired or wireless channel, and provides a packet relay service to a mobile station 205 located in the hot spot 206.

By connecting the FRS 203 to the base station 201 through a wired or a separate channel, other than the channel allocated to the base station 201, it is possible to avoid interference from an adjacent cell or an adjacent sector, and there is no need to separately allocate time slots (or time resources). That is, it is possible to avoid channel interference by arranging the FRS 203 in a shaded area or the hot spot 206 and allocating a separate channel being orthogonal with the channel of the base station 201, between the base station 201 and the FRS 203.

However, when the FRS 203 is connected to the base station 201 through the same radio channel, it is possible to avoid channel interference by allocating separate time slots between the FRS 203 and the base station 201.

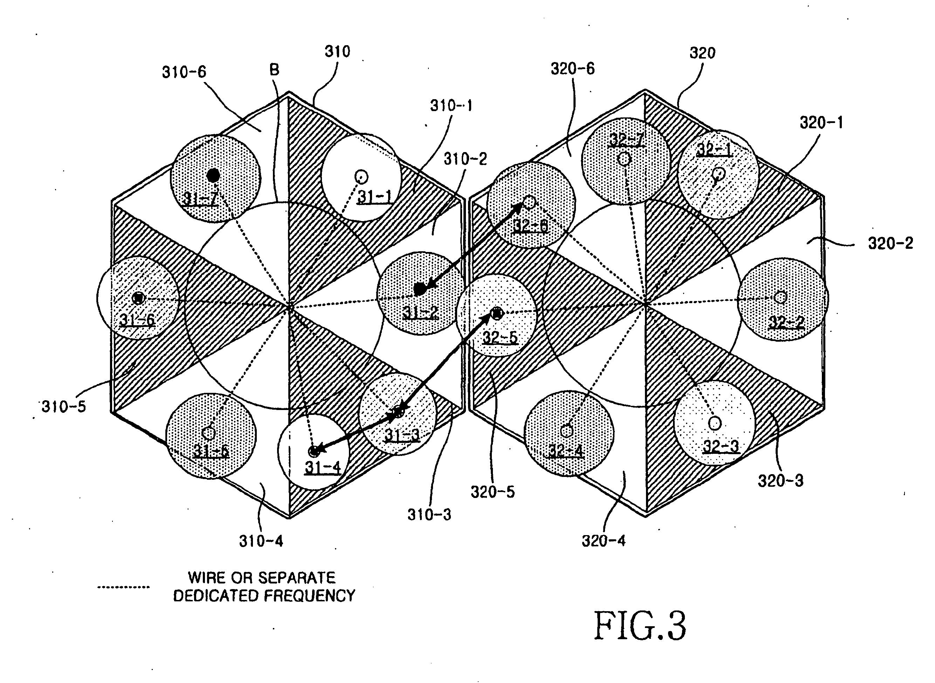

FIG. 3 is a schematic configuration diagram of an FRS-based communication system according to an embodiment of the present invention. Referring to FIG. 3, two HDT systems or two TDD systems (hereinafter referred to as "cells") 310 and 320 are adjacent to each other, and each cell is divided into 6 sectors 310-1 to 310-6 or 320-1 to 320-6. A given system frequency band is divided into two sub-bands, and the two sub-bands are alternately allocated to the first to sixth sectors 310-1 to 310-6 of the first cell 3 10 and the first to sixth sectors 320-1 to 320-6 of the second cell 320. The sectors 310-2 and 320-5 located in the boundary of the first cell 310 and the second cell 320 are allocated different sub-bands.

Additionally, each of the cells 310 and 320 is divided into an HBR service area being adjacent to its base station (not shown) and an LBR service area formed at the outer area of the HBR service area by a virtual boundary B. The LBR service area has hot spots 31-1 to 31-7 or 32-1 to 32-7 formed therein by FRSs installed as occasion demands.

By dividing each cell into 6 sectors and allocating different sub-bands (channels) to adjacent sectors in this manner, it is possible to minimize inter-sector interference as well as inter-cell interference.

The hot spots 31-1 to 31-7 and 32-1 to 32-7 have a limited cell radius and are installed in shaded areas for the HBR service. Positions of the hot spots are determined such that they do not interfere with other cells/sectors. Further, adjacent FRSs among the FRSs using the same resource adjust their power levels according to interference distances, thereby adjusting their cell radiuses so that they do not interfere with each other. For example, the hot spots 32-3 and 32-5 using resource #1 decreases their power levels to reduce their cell sizes so that they do not interfere with each other, and the hot spots 31-3, 31-4, and 32-5 maintain their distances through power level adjustment so that no interference occurs therebetween.

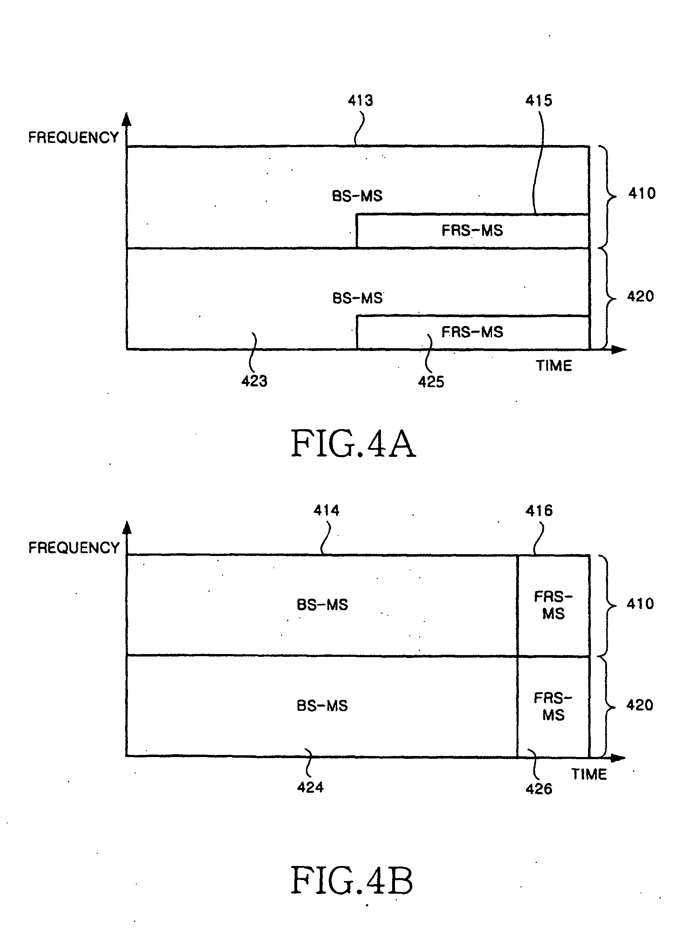

FIGs. 4A and 4B are resource graphs for a description of a resource allocation scheme where a base station communicates with an FRS through a wired or a separate dedicated frequency in an FRS-based communication system according to the an embodiment of the present invention. In FIG. 4A, the full system resource is divided into a first sub-band 410 and a second sub-band 420, and then allocated to their associated sectors of FIG. 3. That is, resources of the first sub-band 410 are allocated to the sectors 310-1, 310-3, and 310-5 of the first cell 310 and the sectors 320-1, 320-3, and 320-5 of the second cell 320, and resources of the second sub-band 420 are allocated to the sectors 310-2, 310-4, and 310-6 of the first cell 310 and the sectors 320-2, 320-4, and 320-6 of the second cell 320. Most of the sub-band resources allocated to each sector are allocated as BS-MS resources 413 and 423 for a downlink from a base station to a mobile station, and a part of the sub-band resources is allocated as FRS-MS resources 415 and 425 for a downlink from an FRS to the mobile station (Partial Frequency Reuse).

As another example, as illustrated in FIG. 4B, each of the sub-bands 410 and 420 undergoes time division, and most of time resources are allocated as BS-MS resources 414 and 424 and a part of the time resources is allocated as FRS-MS resources 416 and 426 (Full Frequency Reuse).

As described above, communication between the base station and the FRS can be achieved through a wired or a separate dedicated channel (indicated by a dotted line).

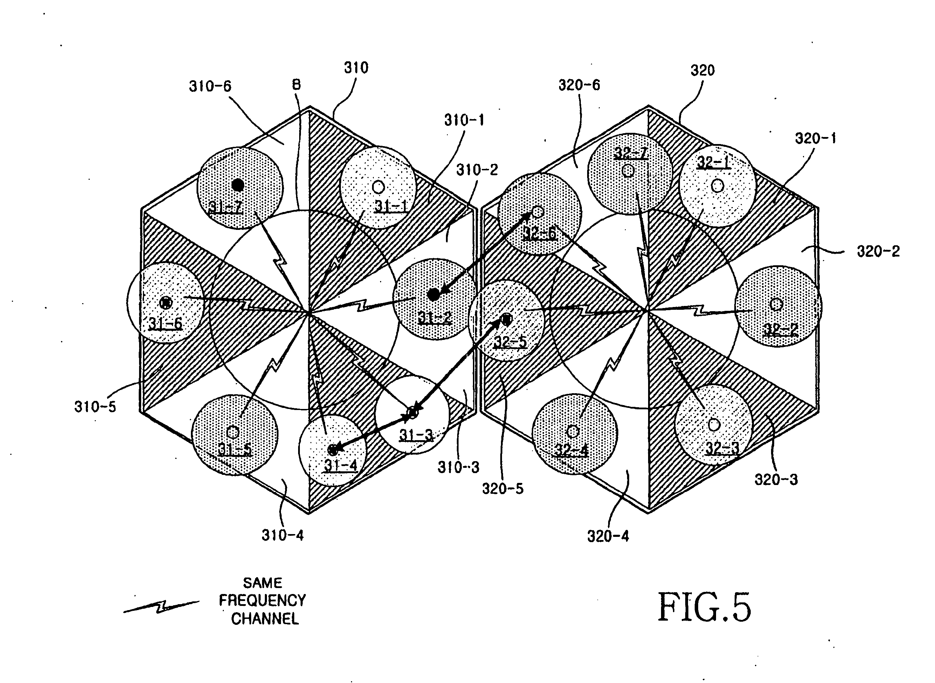

FIG. 5 is a schematic configuration diagram of an FRS-based communication system according to an embodiment of the present invention. Because FIG. 5 is that same as FIG. 3, except that a base station communicates with an FRS using the same radio frequency, the same elements are denoted by the same reference numerals.

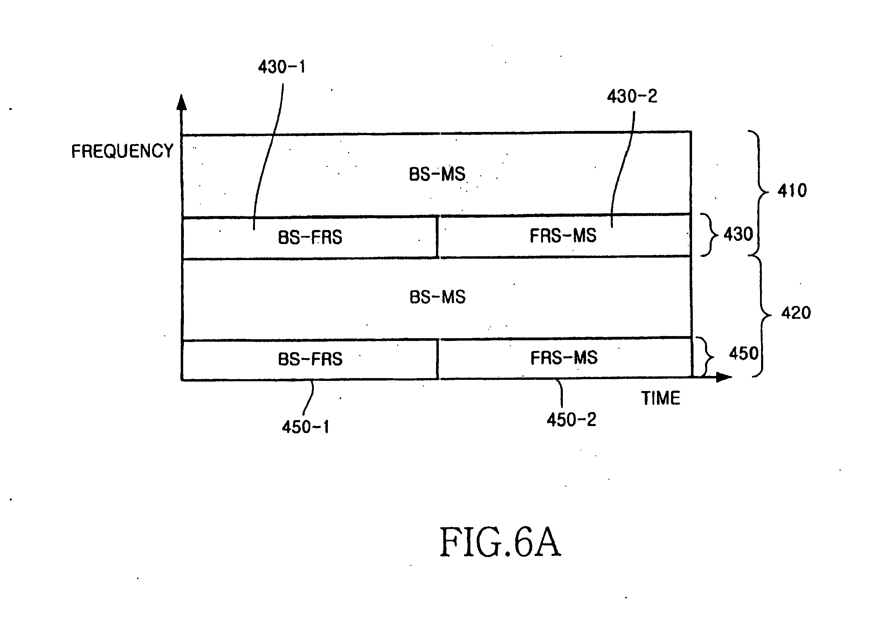

FIGs. 6A to 6C are resource graphs for a description of a resource allocation scheme where a base station and an FRS use the same radio frequency in an FRS-based communication system according to an embodiment of the present invention. Referring FIG. 6A, the full system resource is divided into a first sub-band 410 and a second sub-band 420. Resources of the first sub-band 410 are allocated to the sectors 310-1, 310-3, and 310-5 of the first cell 310 and the sectors 320-1, 320-3, and 320-5 of the second cell 320, and resources of the second sub-band 420 are allocated to the sectors 310-2, 310-4, and 310-6 of the first cell 310 and the sectors 320-2, 320-4, and 320-6 of the second cell 320.

Accordingly, predetermined frequency bands 430 and 450 in the first and second sub-bands 410 and 420 allocated to the sectors are allocated as FRS-only channels. The FRS-only channels 430 and 450 are time-divided into BS-FRS resources 430-1 and 450-1 for communication between the base station and the FRS, and FRS-MS resources 430-2 and 450-2 for communication between the FRS and the mobile station. Therefore, the communication between the base station and the FRS is orthogonal with the communication between the FRS and the mobile station on a time basis, thereby avoiding interference therebetween.

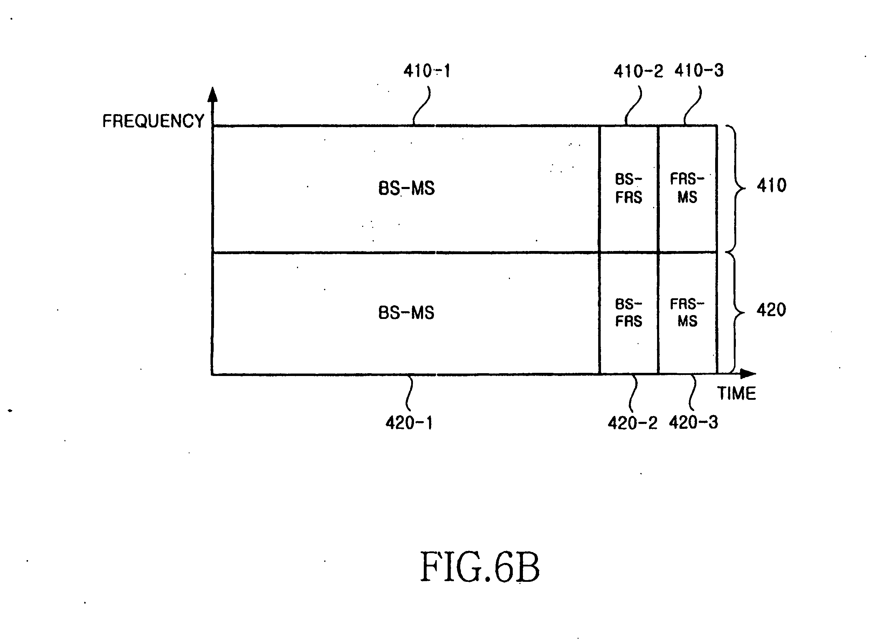

In FIG. 6B, each of the first and second sub-bands 410 and 420 undergoes time division, and the time resources are allocated as BS-MS resources 410-1 and 420-1 for direct communication between the base station and the mobile station, BS-FRS resources 410-2 and 420-2 for communication between the base station and the FRS, and FRS-MS resources 410-3 and 420-3 for communication between the FRS and the mobile station. The foregoing resource allocation uses the same bandwidth and divides the bandwidth for BS-MS communication, BS-FRS communication and FRS-MS communication on a time axis, thereby avoiding interference between the BS-MS communication, the BS-FRS communication and the FRS-MS communication.

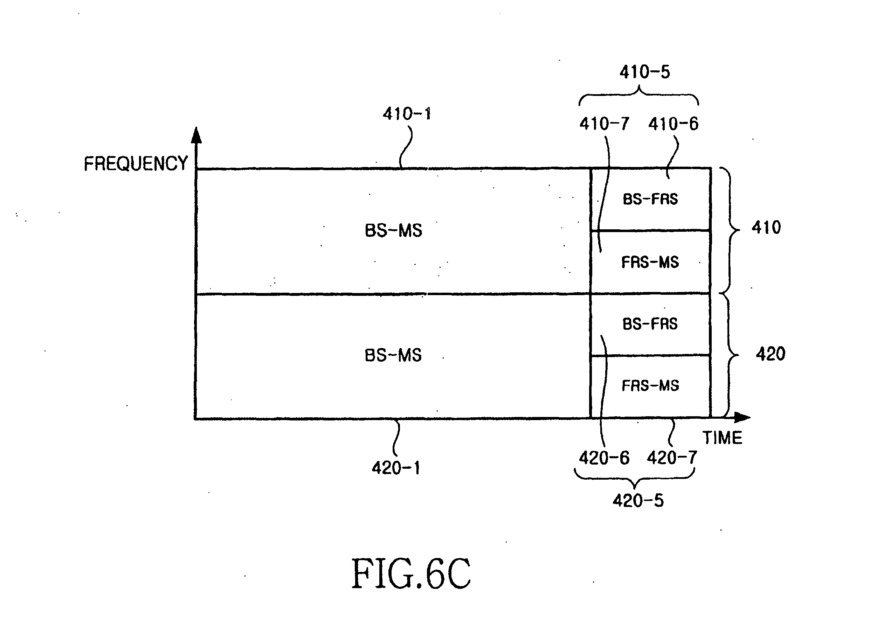

In FIG. 6C, the first and second sub-bands 410 and 420 each are time-divided into direct BS-MS resources 410-1 and 420-1 for direct communication between the base station and the mobile station, and relay BS-MS resources 410-5 and 420-5 for relay communication through the FRS. The relay BS-MS resources 410-5 and 420-5 are frequency-divided into BS-FRS resources 410-6 and 420-6 for communication between the base station and the FRS, and FRS-MS resources 410-7 and 420-7 for communication between the FRS and the mobile station. Therefore, the direct BS-MS resources are orthogonal with the relay BS-MS resources on the time axis, and the BS-FRS resources are orthogonal with the FRS-MS resources on the frequency axis, thereby avoiding interference therebetween.

As described above, the communication system according to the present invention can adjust a traffic load between the base station and the FRS in order to actively cope with a variation in traffic environment in the cell due to movement of the mobile station (Load Balancing).

For traffic dispersion, the present invention can increase or decrease time/frequency resources allocated to the FRS according to the amount of traffics required for the FRS. In this case, the present invention maintains the intact size of the hot spot formed by the FRS and increases or decreases resources according to a traffic request based on quality of service (QoS).

An alternative scheme for traffic dispersion maintains the intact resources allocated to the base station and the FRS, and extends or reduces a size of the hot spot which is the HBR service area of the base station and the service area of the FRS. The size of the hot spot can be extended or reduced by controlling transmission power. In this case, the transmission power should be controlled such that no interference occurs between adjacent FRSs. By adjusting an interference level between adjacent cells or between adjacent FRSs, it is possible to control the entire system capacity.

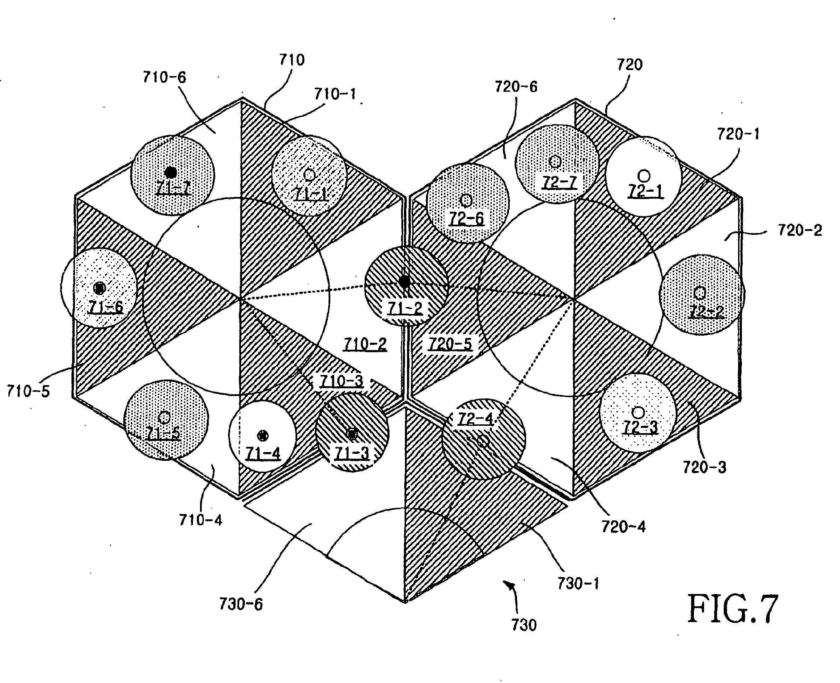

FIG. 7 is a schematic configuration diagram of an FRS-based communication system according to an embodiment of the present invention. In FIG. 7, three cells 710, 720, and 730 are arranged such that they form a boundary. FRSs are installed in the inter-cell boundary, forming hot spots 71-2, 71-3, and 72-4. Among the three cells, the first cell 710 is comprised of sectors 710-1, 710-3, and 710-5, which are allocated a resource #1, and sectors 710-2, 710-4, and 710-6, which are allocated a resource #2. Similarly, the second cell 720 is comprised of first to sixth sectors 720-1 to 720-6, and the third cell 730 is comprised of first to sixth sectors 730-1 to 730-6.

An LBR service area of each cell has a plurality of hot spots 71-1 to 71-7 and 72-1 to 72-7, including the hot spots 71-2, 71-3, and 72-4. The remaining hot spots except for the hot spots 71-2, 71-3, and 71-4 arranged in the inter-cell boundary are allocated a part of the resource #1 or the resource #2 allocated to the cells 710, 720, and 730. The hot spots 71-2, 71-3, and 71-4 located in the inter-cell boundary are allocated a resource #3 being different from the resource #1 and the resource #2, and are commonly controlled by base stations of the cells forming the boundary.

The foregoing resource allocation reserves resources for handover, thereby enabling fast handover. For fast handover, it is preferable for the FRSs located in the boundary to exchange control information with the base stations of the cells forming the boundary through a wire or a separate radio channel. When a plurality of FRSs are installed in the cell boundary, a resource allocated to each FRS can be time-divided and reused, and a mobile station in a hot spot can obtain diversity gain through an FRS that uses several same resources.

The resource sharing scheme in the cell boundary can be implemented for the 6-sector model and also for a 3-sector model.

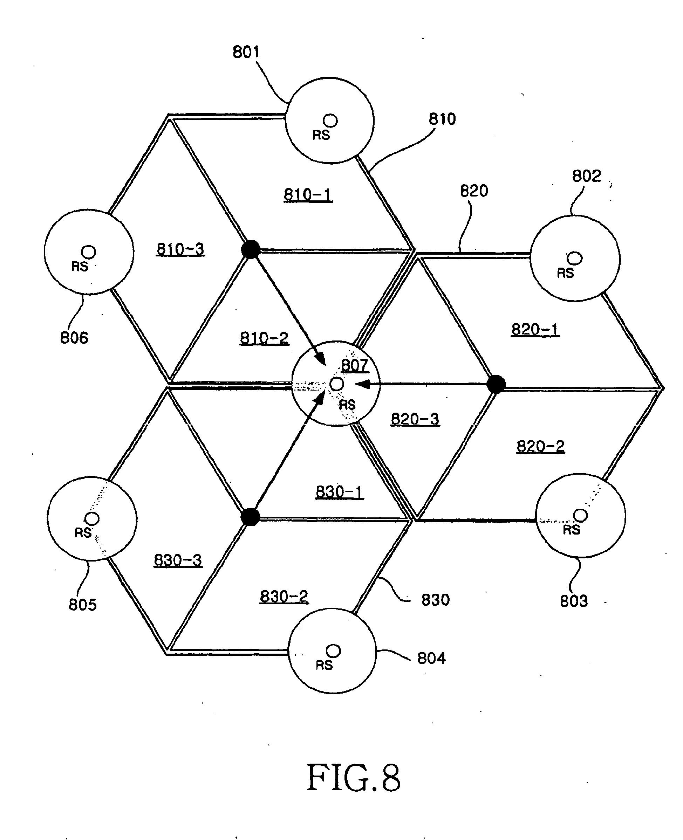

FIG. 8 is a schematic configuration diagram of an FRS-based communication system with a 3-sector model according to an embodiment of the present invention. In FIG. 8, three cells 810, 820, and 830 are arranged forming a boundary, and FRSs are installed in the inter-cell boundary, forming hot spots 801, 802, 803, 804, 805, 806, and 807.

Among the three cells, the first cell 810 is comprised of three sectors 810-1, 810-2, and 810-3 that reuse the same frequency band (for example, a subchannel set including a sub-carrier #1, a sub-carrier #2 and a sub-carrier #3). Similarly, the second cell 820 and the third cell 830 each are comprised of three sectors 820-1 to 820-3 and 830-1 to 830-3, respectively, all of which reuse the frequency band.

The hot spots 801, 802, 803, 804, 805, 806, and 807 share a separate band (for example, a sub-carrier group #4) being different from the frequency bands allocated to the sectors. In this case, the hot spot 807 located in the boundary of the three cells 810, 820, and 830 are commonly managed by base stations of the three cells 810, 820, and 830.

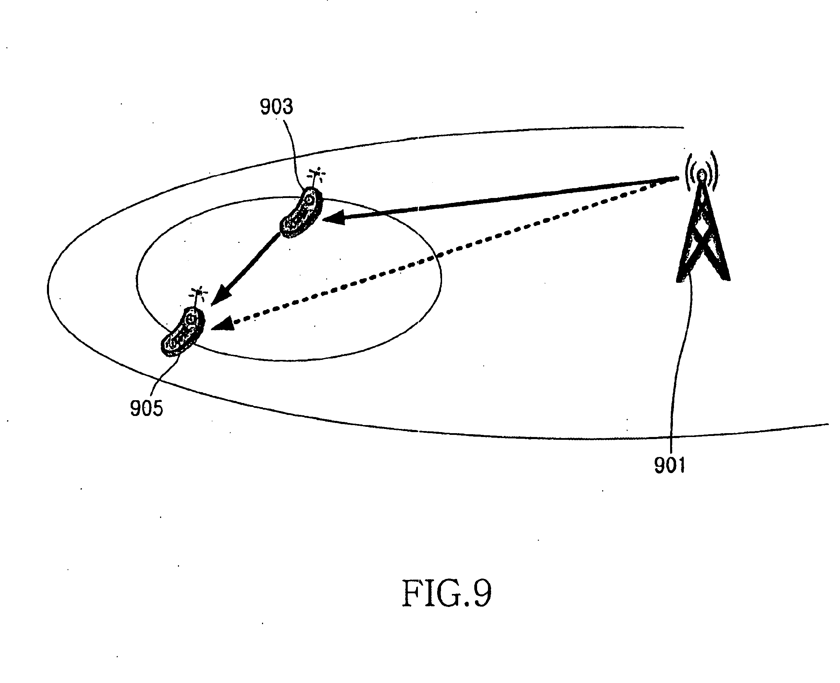

FIG. 9 is a schematic diagram illustrating a cellular communication system using a mobile relay station (MRS) according to an embodiment of the present invention. Referring to FIG. 9, as a mobile station 905 moves to a shaded area, if a channel condition between another adjacent mobile station 901 and a base station 901 is better than the channel condition between the mobile station 905 and the base station 901, the mobile station 903 serves as an MRS.

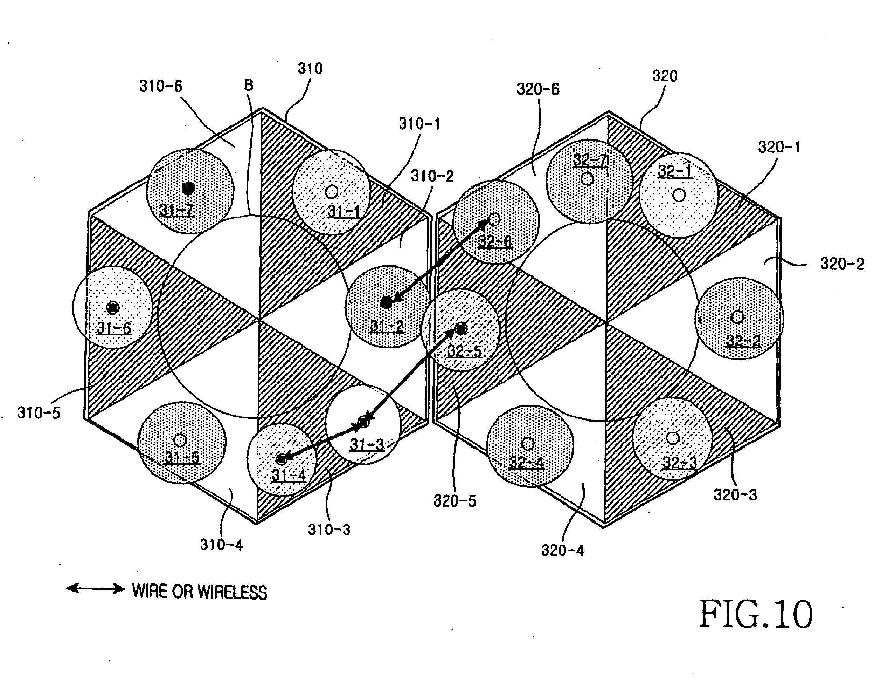

FIG. 10 is a schematic configuration diagram of an RS-based communication system using a 6-sector MRS fixed channel allocation scheme according to an embodiment of the present invention. This embodiment is similar to the embodiment of FIG. 1 in structure of cell, sector, and hot spot, except that the FRS is replaced with the MRS and thus the base station is wirelessly connected to the relay station. Therefore, the same elements are denoted by the same reference numerals.

In FIG. 10, two cells 310 and 320 are adjacent to each other, and each cell is divided into 6 sectors 310-1 to 310-6 or 320-1 to 320-6. Each of the cells 310 and 320 is divided into an HBR service area being adjacent to its base station (not shown) and an LBR service area formed at the outer area of the HBR service area by a virtual boundary B, and the LBR service area has hot spots 31-1 to 31-7 or 32-1 to 32-7 formed therein by FRSs installed as occasion demands.

By dividing each cell into 6 sectors and allocating different sub-bands (channels) to adjacent sectors in this manner, it is possible to minimize inter-sector interference as well as inter-cell interference.

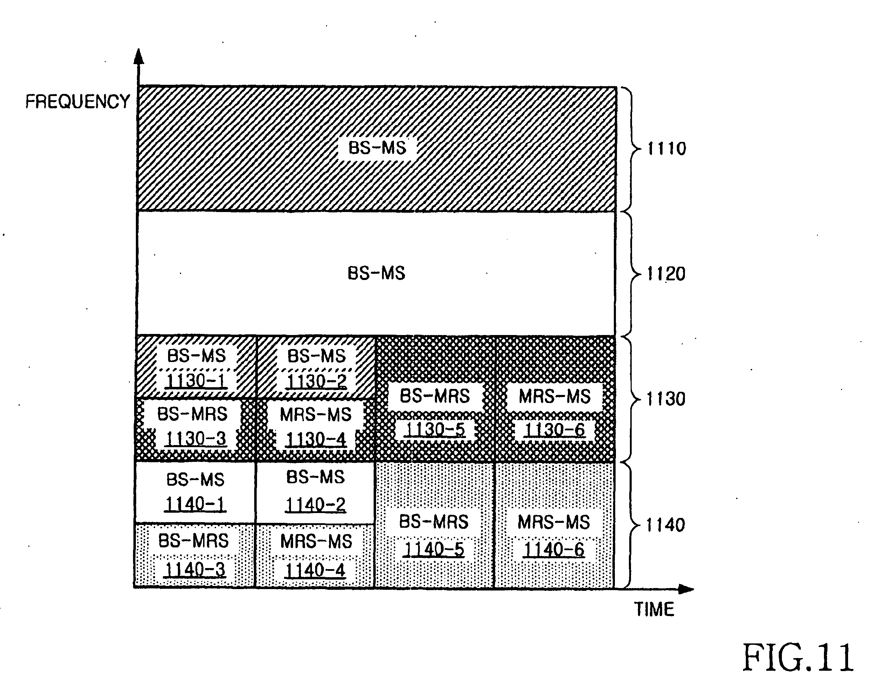

FIG. 11 is a resource graph for a description of a resource allocation scheme in an MRS-based communication system according to an embodiment of the present invention. Referring to FIG. 11, the full system frequency band is divided into four sub-bands 1110, 1120, 1130, and 1140. Among the four sub-bands, the first sub-band 1110 and the second sub-band 1120 are alternately allocated to the cells 310 and 320. That is, the first sub-band 1110 is allocated to odd sectors 310-1, 310-3, and 310-5 of the first cell 310 and odd sectors 320-1, 320-3, and 320-5 of the second cell 320, and the second sub-band 1120 is allocated to even sectors 310-2, 310-4m and 310-6 of the first cell 310 and even sectors 320-2, 320-4m and 320-6 of the second cell 320.

If there is no mobile station requiring a hot spot service, the third sub-band 1130 and the fourth sub-band 1140 each are allocated to odd sectors and even sectors. As a request for the hot spot service increases higher in number, resources of the third sub-band 1130 and the fourth sub-band 1140 are allocated to the corresponding MRS.

That is, for an MRS activated for odd sectors, the third sub-band 1130 is time-divided into BS-MRS resources 1130-3 and 1130-5 for communication between a base station and the MRS, and MRS-MS resources 1130-4 and 1130-6 for communication between the MRS and a mobile station. Similarly, for an MRS activated for even sectors, the fourth sub-band 1140 is time-divided into BS-MRS resources 1140-3 and 1140-5 for communication between the base station and the MRS, and MRS-MS resources 1140-4 and 1140-6 for communication between the MRS and the mobile station.

The BS-MRS resources 1130-3, 1130-5, 1140-3, and 1140-5, and the MRS-MS resources 1130-4, 1130-6, 1140-4, and 1140-6 increase or decrease according to the amount of resources required for MRSs by the mobile station, and the other resources unallocated as the MRS resources remain as the BS-MS resources 1130-1, 1130-2, 1140-1, and 1140-2 for communication between the base station and the mobile station.

Upon moving from an old sector (or cell) to a new sector, the MRS uses the resources allocated for the new sector. For example, if an MRS that was using resources of the sub-band 1140 allocated to an even sector 310-4 of the cell 310 moves to an odd sector 310-3, the MRS communicates with the base station and the mobile station using resources of the sub-band 1130 allocated to the odd sector 310-3. The MRSs in the same sector are allocated different resources, which are orthogonal with each other on the time axis or the frequency axis, or reuse the same resources in such a manner that they secure a reuse distance through power control, such that they suffer no interference from each other.

In addition, when the same frequency resources are used even between the adjacent sectors, the power control is performed taking the interference distance into account.

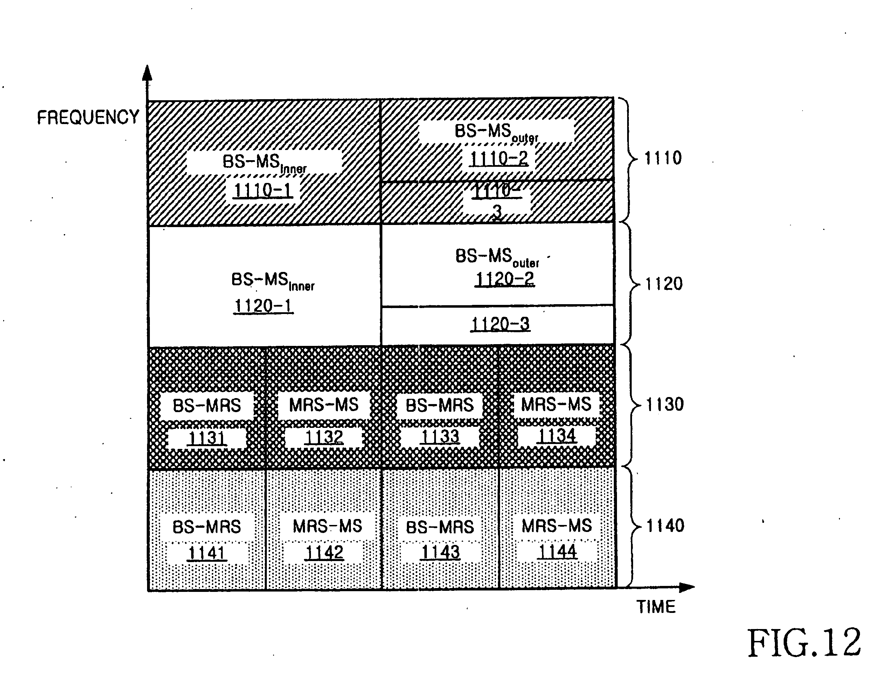

FIG. 12 is a resource graph illustrating a resource sharing/reuse scheme in an MRS-based communication system according to an embodiment of the present invention. Similar to FIG. 11, in FIG. 12, a given system frequency band is divided into four sub-bands 1110, 1120, 1130, and 1140, and each sub-band is time-divided into different resources. The first sub-band 1110 is allocated to odd sectors 310-1, 310-3, and 310-5 of the first cell 310 and odd sectors 320-1, 320-3, and 320-5 of the second cell 320, and the second sub-band 1120 is allocated to even sectors 310-2, 310-4, and 310-6 of the first cell 310 and even sectors 320-2, 320-4, and 320-6 of the second cell 320.

The first and second sub-bands 1110 and 1120 are divided into HBR resources 1110-1 and 1120-1 allocated for an inner area of the corresponding sector, and LBR resources 1110-2 and 1120-2 allocated to an outer area of the sector.

The third and fourth sub-bands 1130 and 1140 are time-divided into BS-MRS resources 1131, 1133, 1141, and 1143 for communication between a base station and an MRS, and MRS-MS resources 1132, 1134, 1142, and 1144 for communication between the MRS and a mobile station, and then allocated to hot spots. More specifically, the third sub-band 1130 is allocated for MRSs located in odd sectors 310-1, 310-3, and 310-5 of the first cell 310 and odd sectors 320-1, 320-3, and 320-5 of the second cell 320, and the fourth sub-band 1140 is allocated for MRSs located in even sectors 310-2, 310-4, and 310-6 of the first cell 310 and even sectors 320-2, 320-4, and 320-6 of the second cell 320.

The BS-MRS resources 1133 and 1143 and the MRS-MS resources 1134 and 1144 in the same time period as the LBR resources 1110-2 and 1120-2 can be dynamically allocated according to the amount of resources required in an outer area of the cell of the MRS. That is, if the BS-MRS resources 1133 and 1143 and the MRS-MS resources 1134 and 1144 are insufficient due to an increase in the resources requested by the MRSs, parts 1110-3 and 1120-3 of the LBR resources 1110-2 and 1120-2 are borrowed. In this embodiment, although MRSs located in odd sectors 310-1, 310-3, 310-5, 320-1, 320-3, and 320-5 borrow a part 1110-3 of the LBR resource 1110-2 for the odd sectors and MRSs located in even sectors 310-2, 310-4, 310-6, 320-2, 320-4, and 320-6 borrow a part 1120-3 of the LBR resource 1120-2 for the even sectors, the present invention should not be restricted to this exact borrowing scheme.

Alternatively, the MRSs located in the odd sectors can also be allocated LBR resources for even sectors and LBR resources for both the odd and even sectors. Similarly, the MRSs located in the even sectors can also be allocated LBR resources for odd sectors and LBR resources for both the odd and even sectors.

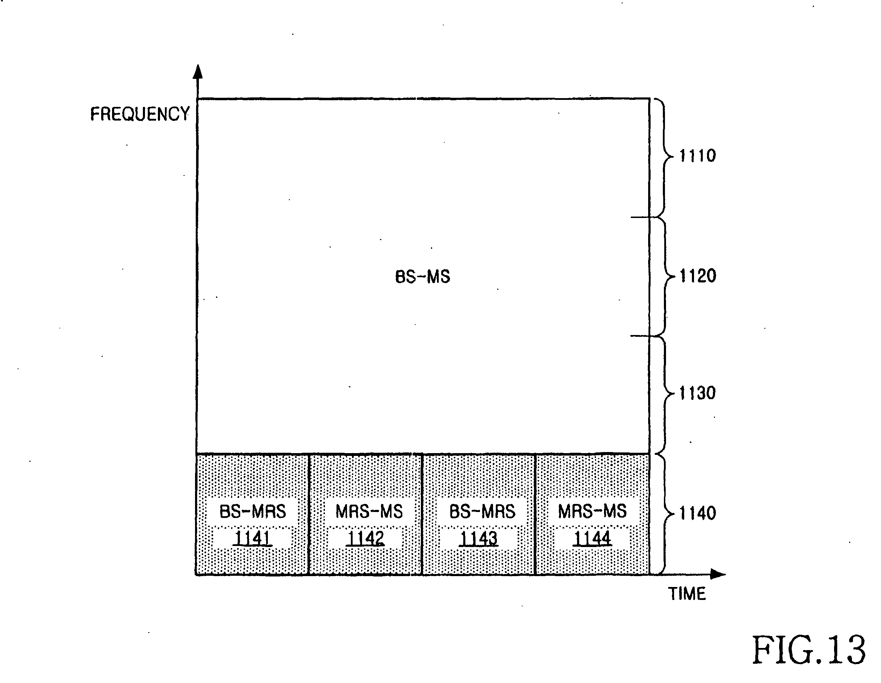

FIG. 13 is a resource graph for a description of an MRS channel reuse scheme in a 3-sector cellular communication system according to an embodiment of the present invention. The MRS-based 3-sector model in FIG. 13 is equal to the FRS-based 3-sector model of FIG. 8 in structure of cell, sector, and hot spot, except that the FRS is replaced with the MRS.

In FIG. 13, among four sub-bands, first, second, and third sub-bands 1110, 1120, and 1130 are reused as BS-MS resources between a base station and a mobile station by sectors 810-1, 810-2, 810-3, 820-1, 820-2, 820-3, 830-1, 830-2, and 830-3 of respective cells, and a fourth sub-band 1140 is reused by MRSs 801, 802, 803,804, 805, 806, and 807. The fourth sub-band 1140 is time-divided into BS-MRS resources 1141 and 1143 for communication between the base station and the MRS and MRS-MS resources 1142 and 1144 for communication between the MRS and the mobile station, and then allocated to each MRS. In this case, base stations of the cells are connected to a radio network controller (RNC, not shown), and manage the MRSs under the control of the RNC. Because a persector frequency reuse factor is 1, a mobile station located in a high-resource efficiency cell formed by MRSs obtains diversity gain. In addition, this resource allocation scheme can reserve resources for handover, thereby supporting fast handover of the mobile station in the cell boundary.

When the MRSs have a control function, the resource allocation scheme can reduce a handover process and a handover time by performing handover between MRSs and then reporting the handover to the base station. If the first to third sub-bands 1110, 1120, and 1130 are separately allocated to the sectors, the system can serve as a system with a per-cell frequency reuse factor=1.

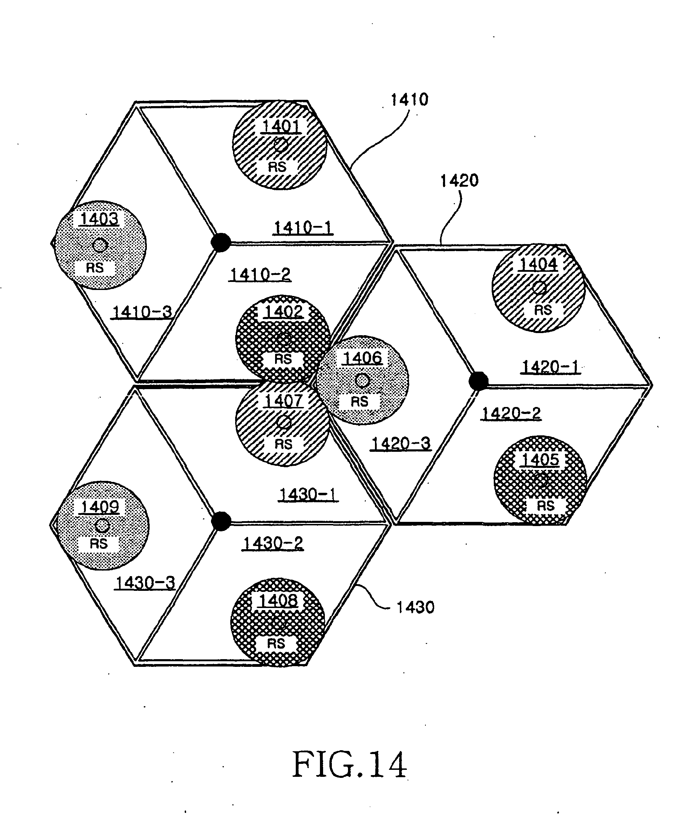

FIG. 14 is a schematic system configuration diagram illustrating an MRS fixed channel allocation scheme in a 3-sector cellular system according to an embodiment of the present invention. In FIG. 14, three sectors 1410, 1420, and 1430 are arranged forming a boundary, and MRSs are installed in the vicinity of the inter-cell boundary, forming hot spots 1401 to 1409. Each cell is sectorized into three sectors. That is, the first cell 1410 is comprised of first to third sectors 1410-1, 1410-2, and 1410-3, the second cell 1420 is comprised of first to third sectors 1420-1, 1420-2, and 1420-3, and the third cell 1430 is comprised of first to third sectors 1430-1, 1430-2 and 1430-3.

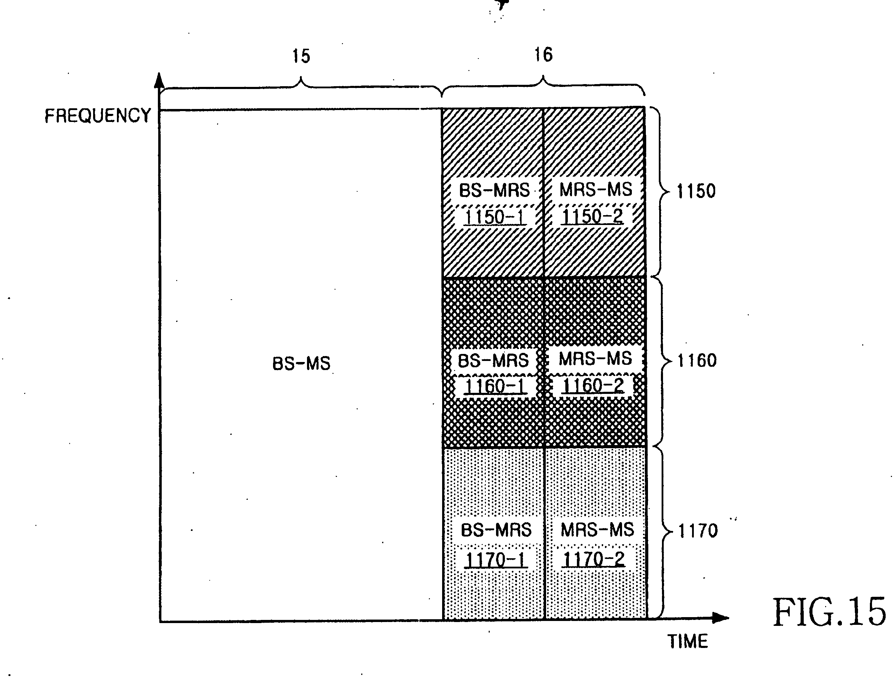

FIG. 15 is a resource graph for a description of an MRS fixed channel allocation scheme in a 3-sector cellular communication system according to an embodiment of the present invention. In FIG. 15, the full system resource is divided into a BS-MS resource 15 for communication between a base station and a mobile station, and an MRS resource 16 for MRS communication. The MRS resource 16 is frequency-divided into first to third sub-bands 1150, 1160, and 1170 on the frequency axis. Each of the sub-bands is divided into BS-MRS resources 1150-1, 1160-1, and 1170-1 for communication between the base station and the MRS, and MRS-MS resources 1150-2, 1160-2, and 1170-2 for communication between the MRS and the mobile station.

Referring to FIGs. 14 and 15, the BS-MS resource 15 is reused in sectors 1410-1, 1410-2, 1410-3, 1420-1, 1420-2, 1420-3, 1430-1, 1430-2, and 1430-3 of the cells 1410, 1420, and 1430. In the MRS resource 16, the first sub-bands 1150 are allocated to hot spots 1401, 1404, and 1407 formed by the MRSs located in first sectors 1410-1, 1420-1, and 1430-1 of the cells, the second sub-bands 1160 are allocated to second sectors 1410-2, 1420-2, and 1430-2 of the cells, and the third sub-bands 1170 are allocated to third sectors 1410-3, 1420-3, and 1430-3 of the cells.

As described above, in the present invention, because the BS-MS resource 15 is orthogonal with the MRS resource 16 on the time axis, it is possible to avoid interference between BS-MS communication, BS-MRS communication, and MRS-MS communication. Further, because adjacent MRSs are allocated resources, which are orthogonal with each other on the frequency axis, it is possible to avoid interference between MRSs (frequency reuse factor = 3).

In addition, because the MRS resource is time-divided into the BS-MRS resources and the MRS-MS resources, it is possible to avoid interference between BS-MRS communication and MRS-MS communication. In this case, it is preferable for the sectors to use independent frequency hopping in the same frequency band.

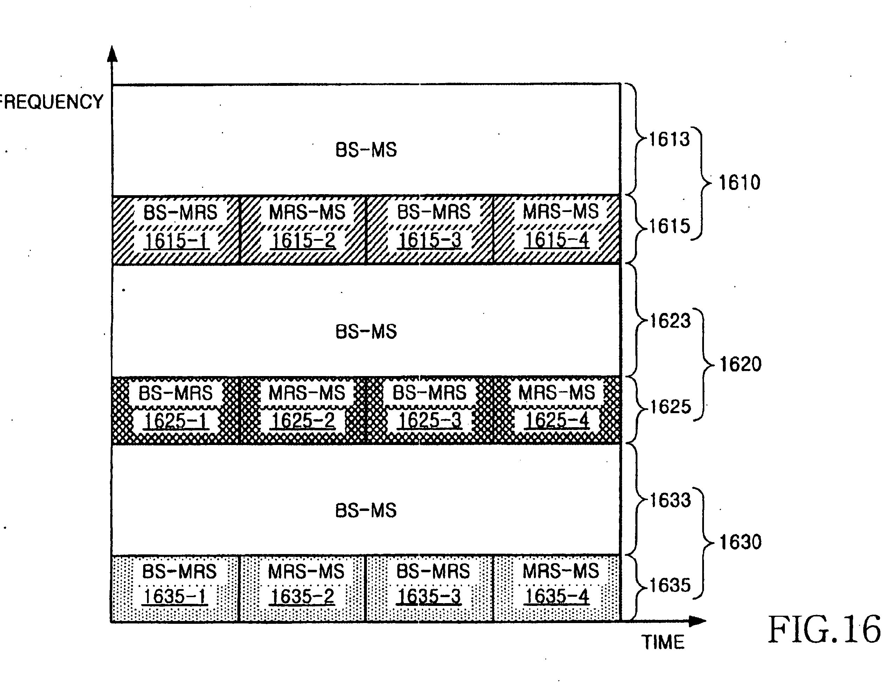

FIG. 16 is a resource graph illustrating an MRS fixed channel allocation scheme in a 3-sector cellular communication system according to an embodiment of the present invention. In FIG. 16, the full system resource is frequency-divided into three sub-bands 1610, 1620, and 1630, and each of the sub-bands is frequency-divided into BS-MS resources 1613, 1623, and 1633 for communication between a base station and a mobile station, and MRS resources 1615, 1625, and 1635 for MRS communication. The MRS resources 1615, 1625, and 1635 each are time-divided into BS-MRS resources 1615-1, 1615-3, 1625-1, 1625-3, 1635-1, and 1635-3 for communication between the base station and the MRS, and MRS-MS resources 1615-2, 1615-4, 1625-2, 1625-4, 1635-2 and 1635-4 for communication between the MRS and the mobile station.

Referring to FIGs. 14 and 16, the BS-MS resources 1613, 1623 and 1633 are reused in sectors 1410-1, 1410-2, 1410-3, 1420-1, 1420-2, 1420-3, 1430-1, 1430-2, and 1430-3 of the cells 1410, 1420, and 1430. The MRS resource 1615 of the first sub-band 1610 is allocated to MRSs, i.e., hot spots 1401, 1404, and 1407, located in first sectors 1410-1, 1420-1, and 1430-1 of the cells, the MRS resource 1625 of the second sub-band 1620 is allocated to MRSs located in second sectors 1410-2, 1420-2, and 1430-2 of the cells, and the MRS resource 1635 of the third sub-band 1630 is allocated to third sectors 1410-3, 1420-3, and 1430-3 of the cells.

In this embodiment of the present invention, because the BS-MS resources 1613, 1623, and 1633 are orthogonal with the MRS resources 1615, 1625, and 1635, it is possible to avoid interference between BS-MS communication, BS-MRS communication, and MRS-MS communication. Further, because adjacent MRSs are allocated resources, which are orthogonal with each other on the frequency axis, it is possible to avoid interference between MRSs.

In addition, because the MRS resources are time-divided into the BS-MRS resources 1615-1, 1615-3, 1625-1, 1625-3, 1635-1, and 1635-3, and the MRS-MS resources 1615-2, 1615-4, 1625-2, 1625-4, 1635-2, and 1635-4, it is possible to avoid interference between BS-MRS communication and MRS-MS communication.

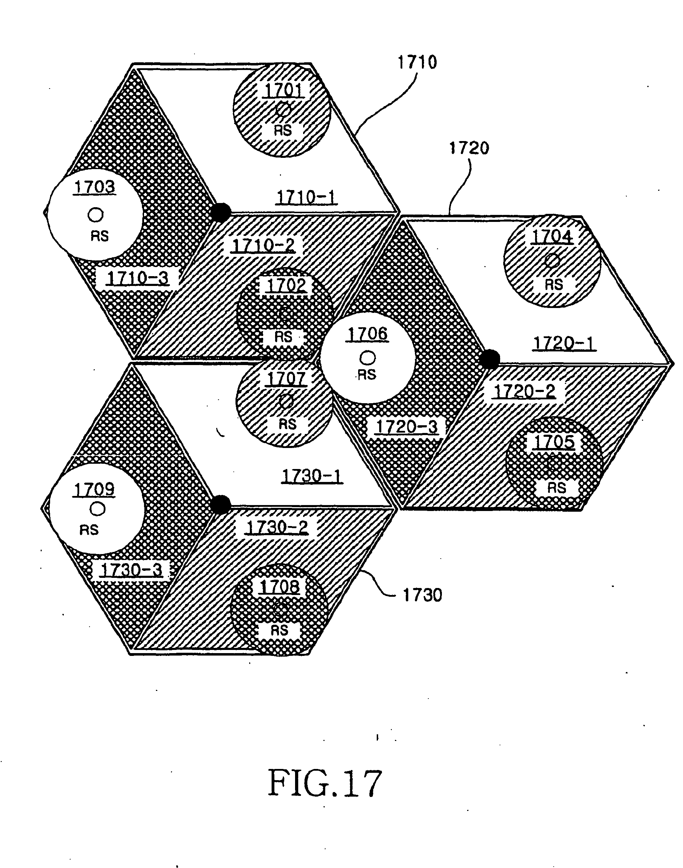

FIG. 17 is a schematic system configuration diagram for a description of an MRS fixed channel allocation scheme in a 3-sector cellular communication system according to an embodiment of the present invention. FIG. 17 is that same as FIG. 16 in system configuration except that independent resources are allocated to the sectors.

Referring to FIG. 17, three cells 1710, 1720, and 1730 are arranged forming a boundary, and MRSs are installed in the vicinity of the inter-cell boundary, forming hot spots 1701 to 1709. Each cell is sectorized into three sectors. That is, the first cell 1710 is comprised of first to third sectors 1710-1, 1710-2, and 1710-3, the second cell 1720 is comprised of first to third sectors 1720-1, 1720-2, and 1720-3, and the third cell 1730 is comprised of first to third sectors 1730-1, 1730-2, and 1730-3. Alternatively, the hot spots where MRSs are located in the cell boundary can be implemented with a single hot spot. For example, the MRSs 1702, 1706, and 1707 can be implemented with a single MRS.

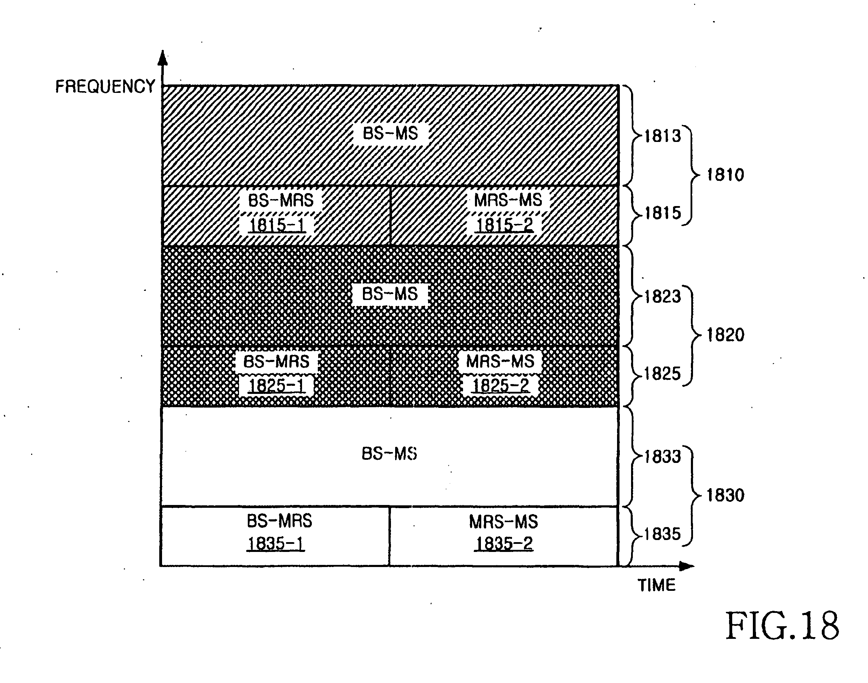

FIG. 18 is a resource graph for a description of an MRS fixed channel allocation scheme in a 3-sector cellular communication system according to an embodiment of the present invention. In FIG. 18, a given system resource is frequency-divided into three sub-bands 1810, 1820, and 1830, and the sub-bands each are frequency-divided again into BS-MS resources 1813, 1823, and 1833 for communication between a base station and a mobile station, and MRS resources 1815, 1825, and 1835 for MRS communication. The MRS resources each are time-divided again into BS-MRS resources 1815-1, 1825-1, and 1835-1 for communication between the base station and the MRS, and MRS-MS resources 1815-2, 1825-2, and 1835-2 for communication between the MRS and the mobile station.

Referring to FIGs. 17 and 18, among the three sub-bands, the BS-MS resource 1813 of the first sub-band 1810 is allocated to the second sectors 1710-2, 1720-2, and 1730-2 of the cells, the BS-MS resource 1823 of the second sub-band 1820 is allocated to the third sectors 1710-3, 1720-3, and 1730-3 of the cells, and the BS-MS resource 1833 of the third sub-band 1830 is allocated to the first sectors 1710-1, 1720-1, and 1730-1 of the cells. Among the three sub-bands, the MRS resource 1815 of the first sub-band 1810 is allocated to the hot spots 1701, 1704, and 1707 located in the first sectors 1710-1, 1720-1, and 1730-1 of the cells, the MRS resource 1825 of the second sub-band 1820 is allocated to the hot spots 1702, 1705, and 1708 located in the second sectors 1710-2, 1720-2, and 1730-2 of the cells, and the MRS resource 1835 of the third sub-band 1830 is allocated to the hot spots 1703, 1706, and 1709 located in the third sectors 1710-3, 1720-3, and 1730-3 of the cells. The MRS resources 1815, 1825, and 1835 are allocated as BS-MRS resources and MRS-MS resources.

In this embodiment of the present invention, because the system resource is divided into three sub-bands and the three sub-bands are independently allocated to the sectors of each cell on a one-to-one basis, it is possible to avoid inter-sector interference. Because the MRS resources allocated to the sectors are orthogonal with each other on the frequency axis, it is possible to avoid inter-MRS interference.

In addition, because the resources for BS-MRS communication are orthogonal with the resources for MRS-MS communication on the time axis, it is possible to avoid interference between the BS-MRS communication and the MRS-MS communication.

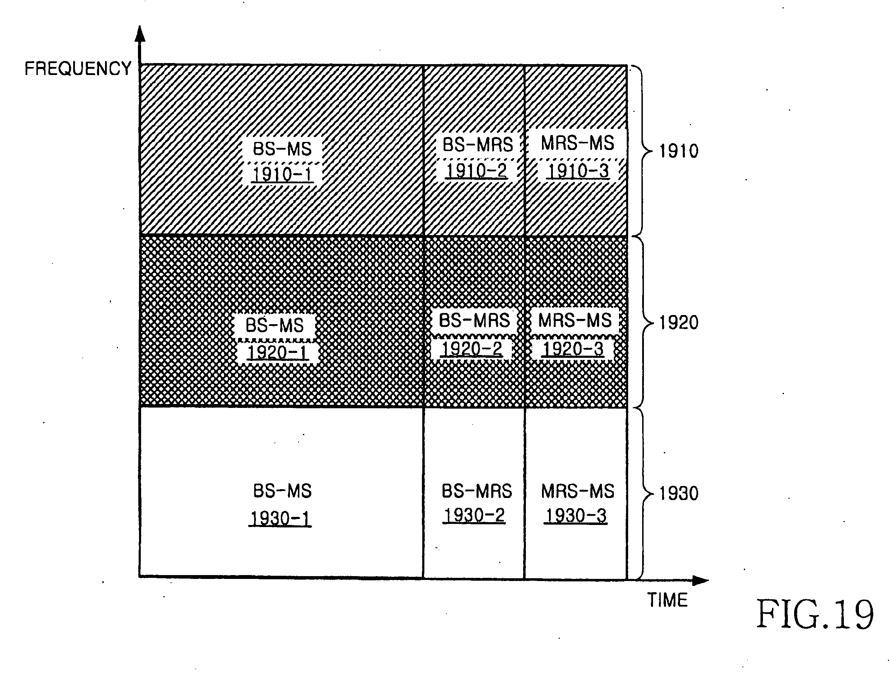

FIG. 19 is a resource graph for a description of an MRS fixed channel allocation scheme in a 3-sector cellular communication system according to an embodiment of the present invention. Referring to FIG. 19, a system resource is frequency-divided into three sub-bands 1910, 1920, and 1930, and the sub-bands each are time-divided into BS-MS resources 1910-1, 1920-1, and 1930-1 for direct communication between a base station and a mobile station, and MRS resources for MRS relay communication. The MRS resources of the sub-bands 1910, 1920, and 1930 are time-divided again into BS-MRS resources 1910-2, 1920-2, and 1930-2 for communication between the base station and the MRS, and MRS-MS resources 1910-3, 1920-3, and 1930-3 for communication between the MRS and the mobile station.

Referring to FIGs. 17 and 19, the BS-MS resource 1910-1 of the first sub-band 1910 is allocated to the second sectors 1710-2, 1720-2, and 1730-2 of the cells, the BS-MS resource 1920-1 of the second sub-band 1920 is allocated to the third sectors 1710-3, 1720-3, and 1730-3 of the cells, and the BS-MS resource 1930-1 of the third sub-band 1930 is allocated to the first sectors 1710-1, 1720-1, and 1730-1 of the cells.

The MRS resources of the first sub-band 1910 are allocated to the hot spots 1701, 1704, and 1707 located in the first sectors 1710-1, 1720-1, and 1730-1 of the cells, the MRS resources of the second sub-band 1920 are allocated to the hot spots 1702, 1705, and 1708 located in the second sectors 1710-2, 1720-2, and 1730-2 of the cells, and the MRS resources of the third sub-band 1930 are allocated to the hot spots 1703, 1706, and 1709 located in the third sectors 1710-3, 1720-3, and 1730-3 of the cells. The MRS resources are time-divided into the BS-MRS resources and the MRS-MS resources.

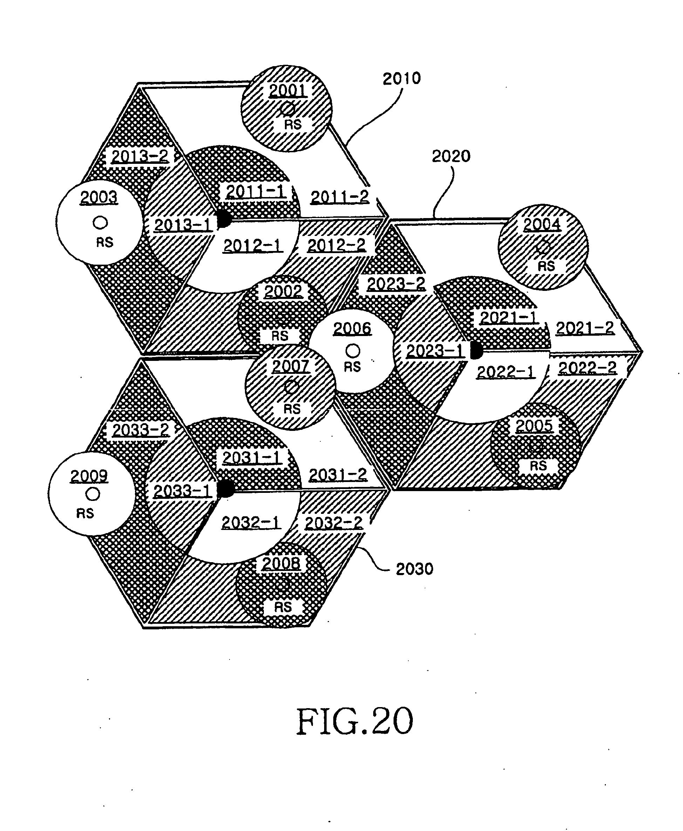

FIG. 20 is a schematic system configuration diagram for a description of another MRS fixed channel allocation scheme in a 3-sector cellular communication system according to an embodiment of the present invention. Referring to FIG. 20, three adjacent cells 2010, 2020, and 2030 each are divided into three sectors, and divided into an inner area (or HBR service area) being adjacent to its base station and an outer area (or LBR service area) surrounding the inner area. More specifically, the first cell 2010 is comprised of a first sector including a first HBR service area 2011-1 and a first LBR service area 2011-2, a second sector including a second HBR service area 2012-1 and a second LBR service area 2012-2, and a third sector including a third HBR service area 2013-1 and a third LBR service area 2013-2, the first to third sectors being formed in different directions on the basis of a base station thereof. The second cell 2020 is comprised of a first sector including a first HBR service area 2021-1 and a first LBR service area 2021-2, a second sector including a second HBR service area 2022-1 and a second LBR service area 2022-2, and a third sector including a third HBR service area 2023-1 and a third LBR service area 2023-2. The third cell 2030 is comprised of a first sector including a first HBR service area 2031-1 and a first LBR service area 2031-2, a second sector including a second HBR service area 2032-1 and a second LBR service area 2032-2, and a third sector including a third HBR service area 2033-1 and a third LBR service area 2033-2. The sectors have MRSs 2001, 2002, 2003, 2004, 2005, 2006, and 2007 located in the respective cell boundaries thereof.

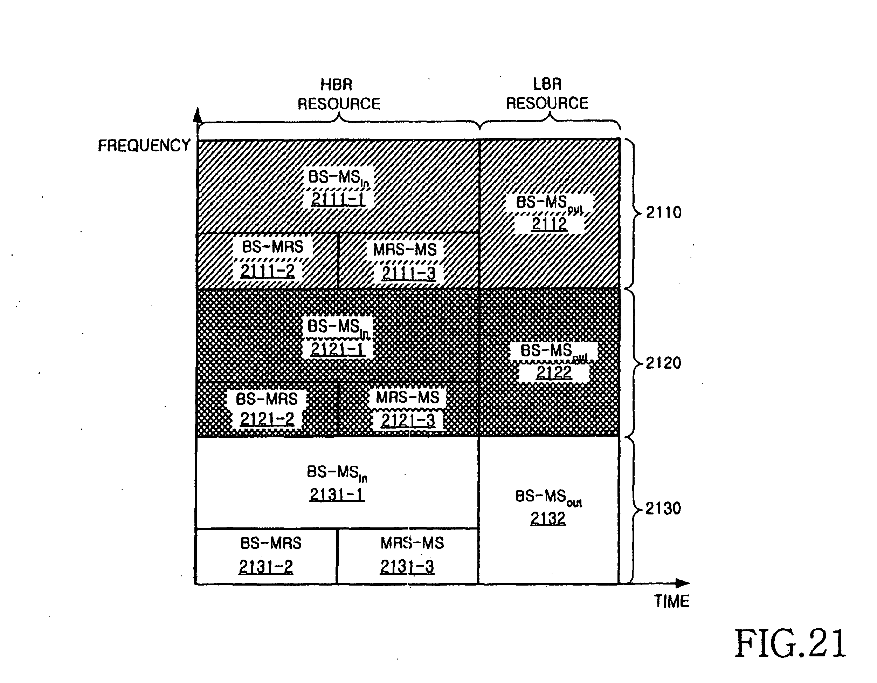

FIG. 21 is a resource graph for a description of an MRS fixed channel allocation scheme in a 3-sector cellular communication system according to an embodiment of the present invention. Referring to FIG. 21, a given system resource is frequency-divided into three sub-bands 2110, 2120, and 2130, and the sub-bands each are time-divided again into an HBR resource and an LBR resource. The HBR resource is frequency-divided into a BS-MS resource for direct communication between a base station and a mobile station located in an inner area of the cell, and an MRS resource for communication through a relay station (RS). The MRS resource is time-divided into a BS-MRS resource for communication between the base station and an MRS and an MRS-MS resource for communication between the MRS and the mobile station.

More specifically, among the three sub-bands, the first sub-band 2110 is time-divided into an HBR resource 2111 and an LBR resource 2112, the second sub-band 2120 is time-divided into an HBR resource 2121 and an LBR resource 2122, and the third sub-band 2130 is time-divided into an HBR resource 2131 and an LBR resource 2132.

The HBR resource 2111 of the first sub-band 2110 is frequency-divided into a BS-MS resource 2111-1 for communication between the base station and the mobile station located in the inner area (HBR service area) of the cell, and an MRS resource for relay communication through the MRS, and the MRS resource is time-divided again into a BS-MRS resource 2111-2 for communication between the base station and the MRS and an MRS-MS resource 2111-3 for communication between the MRS and a mobile station located in a hot spot.

The HBR resource 2121 of the second sub-band 2120 is frequency-divided into a BS-MS resource 2121-1 for communication between the base station and the mobile station located in the inner area of the cell, and an MRS resource for relay communication through the MRS. The MRS resource is time-divided again into a BS-MRS resource 2121-2 for communication between the base station and the MRS and an MRS-MS resource 2121-3 for communication between the MRS and a mobile station located in a hot spot.

The HBR resource 2131 of the third sub-band 2130 is frequency-divided into a BS-MS resource 2131-1 for communication between the base station and the mobile station located in the inner area (HBR service area) of the cell, and an MRS resource for relay communication through the MRS, and the MRS resource is time-divided again into a BS-MRS resource 2131-2 for communication between the base station and the MRS and an MRS-MS resource 2131-3 for communication between the MRS and a mobile station located in a hot spot.

Referring to FIGs. 20 and 21, among the three sub-bands, the BS-MS resource 2111-1 of the first sub-band 2110 is allocated to HBR service areas 2013-1, 2023-1, and 2033-1 of the third sectors of the cells 2010, 2020, and 2030, the BS-MS resource 2121-1 of the second sub-band 2120 is allocated to HBR service areas 2011-1, 2021-1, and 2031-1 of the first sectors of the cells 2010, 2020, and 2030, and the BS-MS resource 2131-1 of the third sub-band 2130 is allocated to HBR service areas 2012-1, 2022-1, and 2032-1 of the second sectors of the cells 2010, 2020, and 2030.

The MRS resources 2111-2 and 2111-3 of the first sub-band 2110 are allocated to the hot spots (or MRSs) 2001, 2004, and 2007 located in the first sectors of the cells, the MRS resources 2121-2 and 2121-3 of the second sub-band 2120 are allocated to the hot spots 2002, 2005, and 2008 located in the second sectors of the cells, and the MRS resources 2131-2 and 2131-3 of the third sub-band 2130 are allocated to the hot spots 2003, 2006, and 2009 located in the third sectors of the cells. The MRS resources each are time-divided into BS-MRS resources 2111-2, 2121-2, and 2131-2 for BS-MRS communication, and MRS-MS resources 2111-3, 2121-3, and 2131-3 for MRS-MS communication.

In this embodiment of the present invention, because the HBR resources allocated to the hot spots for extending the inner areas of the cells for a high-speed data service are orthogonal with the LBR resources allocated to the outer areas of the cells on the time axis, it is possible to avoid interference between the HBR communication and the LBR communication. Because the BS-MS resources for direct communication between the base station and the mobile station are orthogonal with the MRS resources for relay communication on the frequency axis, it is possible to avoid interference between the BS-MS direct communication and the BS-MRS-MS relay communication.

In addition, the BS-MRS communication and the MRS-MS communication are performed through the time-divided resources, thus avoiding interference therebetween.

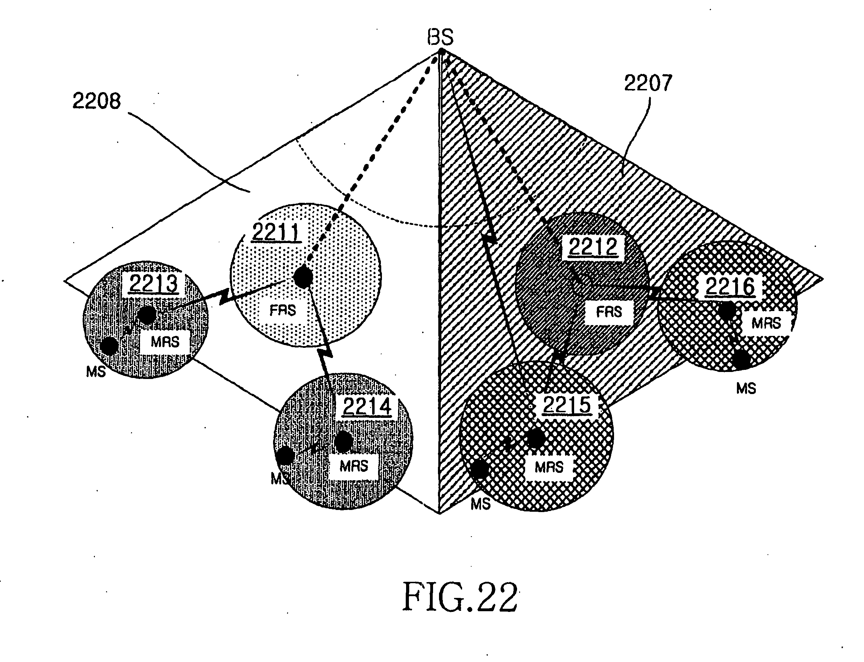

FIG. 22 is a schematic system configuration diagram of a cellular communication system according to an embodiment of the present invention. FIG. 22 shows only two sectors 2208 and 2207 for convenience, in a 6-sector cellular system in which the full system resource is divided into two sub-bands and the two sub-bands are alternately allocated. The sectors each are divided into an inner area for an HBR service and an outer area for an LBR service. The outer areas of the sectors each have one FRS and two MRSs arranged in the cell boundary, forming hot spots 2211, 2212, 2213, 2214, 2215, and 2216.

The base station communicates with the FRSs through a wire or a separate dedicated frequency, and the FRSs are allocated relay resources from the base station. The FRSs allocate a part of the allocated relay resources to the MRSs located in the same sector. The MRSs minimize interference between the hot spots by adjusting the cell size through power control.

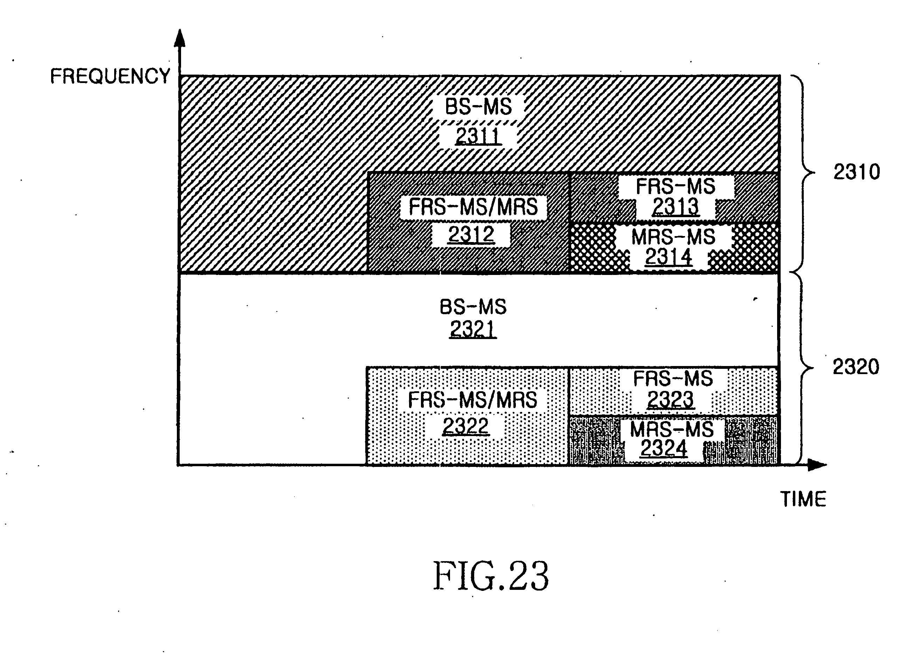

FIG. 23 is a resource graph for a description of a resource allocation scheme in a cellular communication system according to an embodiment of the present invention. Referring to FIG. 23, a given system resource is frequency-divided into a first sub-band 2310 and a second sub-band 2320, and then allocated as direct communication resources 2311 and 2321 for direct communication between a base station and mobile stations in corresponding sectors. If FRSs are installed in the corresponding sectors, parts of the direct communication resources are allocated as relay communication resources 2312, 2313, 2314, 2322, 2323, and 2324 for the FRSs. If the MRSs are activated in the sectors, the relay communication resources are time-divided into FRS-MS/MRS resources 2312 and 2322 for communication between the FRS and the mobile station/MRS, and RS-MS resources 2313, 2314, 2323, and 2324 for communication between the relay station and the mobile station, and the RS-MS resources are frequency-divided into FRS-MS resources 2313 and 2323 for communication between the FRS and the mobile station, and MRS-MS resources 2314 and 2324 for communication between the MRS and the mobile station.

Referring to FIGs. 22 and 23, the BS-MS resource 2311 of the first sub-band 2310 is allocated to the first sector 2207, and the BS-MS resource 2321 of the second sub-band 2320 is allocated to the second sector 2208. If the FRSs are installed in the sectors, forming the first hot spots 2211 and 2212, a part of the BS-MS resource 2311 is allocated to the FRS as the relay communication resources 2312, 2313, and 2314. If the MRSs are activated in the sectors, forming the second hot spots 2213, 2214, 2215, and 2216, the relay communication resources are time-divided into the FRS-MS/MRS resources 2312 and 2322, and the RS-MS resources 2313, 2314, 2323, and 2324. The RS-MS resources are frequency-divided into the FRS-MS resources 2313 and 2323 and the MRS-MS resources 2314 and 2324, and then allocated to the first hot spots 2211 and 2212 and the second hot spots 2213, 2214, 2215, and 2216, respectively.

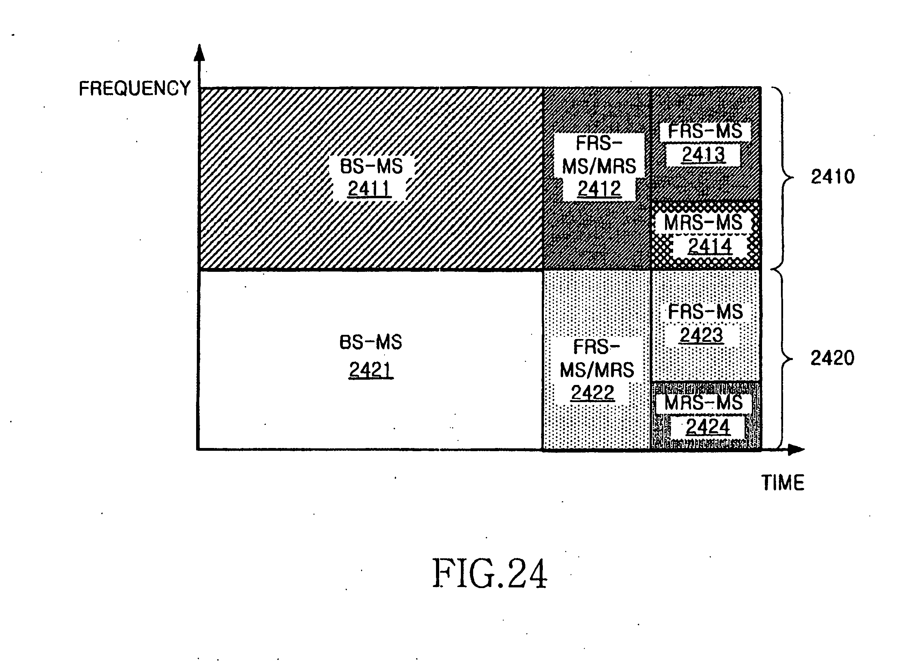

FIG. 24 is a resource graph for a description of a resource allocation scheme in a cellular communication system according to an embodiment of the present invention. Referring to FIGs. 22 and 24, a given system resource is frequency-divided into a first sub-band 2410 and a second sub-band 2420, and then allocated to the first and second sectors 2207 and 2208, respectively. The sub-bands each are time-divided into direct communication resources 2411 and 2421 for direct communication between the base station and the mobile station, and relay communication resources for relay communication through the RSs, and the relay communication resources are time-divided again into FRS-MS/MRS resources 2412 and 2422 for communication between the FRS and the mobile station/MRS, and RS-MS resources 2413, 2414, 2423, and 2424 for communication between the RS and the mobile station. The RS-MS resources are frequency-divided again into FRS-MS resources 2413 and 2423 for communication between the FRS and the mobile station, and MRS-MS resources 2414 and 2424 for communication between the MRS and the mobile station.

As can be understood from the foregoing description, the novel method extends service coverage of a base station, i.e., HBR service coverage, using fixed or mobile relay stations, thereby improving system performance.

In addition, in the system providing the HBR service and the LBR service based on the HDT and TDD duplexing techniques, the novel method installs a fixed relay station in a shaded area for the HBR service according to traffic variation in the cell, or activates/inactivates the fixed relay station or the mobile relay station in the LBR service area to extend/reduce the HBR service coverage, increasing resource efficiency.

Furthermore, the communication system according to the present invention sectorizes each cell and adaptively allocates resources taking into account characteristics of the sectors and relay stations activated in the sectors, thereby minimizing interference between adjacent cells, sectors, and hot spots.

While the present invention has been shown and described with reference to a certain preferred embodiment thereof, it will be understood by those skilled in the art that various changes in form and details may be made therein without departing from the scope of the present invention as defined by the appended claims.

## Claims

1. A relay communication method in an orthogonal frequency division multiple access, OFDMA, communication system including at least one base station (101, 201, 901) for providing a multiple access service to a plurality of mobile stations (105, 205, 905) frame by frame, comprising the steps of:
dividing a cell defined by a transmission power of the at least one base station into a plurality of sectors;
providing by the base station two services, a first service only supported in an inner area of the cell with a first extension and a second service supported in an outer area of the cell with a second extension, wherein the second extension is larger than the first extension;
arranging at least one relay station (103, 203, 903) in the outer area outside the inner area within each sector of the cell or on an inter-cell boundary between adjacent cells, said relay station extending the first service to the outer area, and
allocating a partial resource of a frame for communication between the base station and the mobile station through the relay station.

2. The relay communication method of claim 1, wherein the base station (101,201,901) communicates with the relay station (103,203,903) through one of a wire and a separate dedicated frequency.

3. The relay communication method of claim 2, wherein the frame is divided into a direct communication resource for direct communication between the base station (101,201,901) and the mobile station (105,205,905) and a relay communication resource for relay communication through the relay station (103,203,903).

4. The relay communication method of claim 3, wherein the relay communication resource is allocated for communication between the relay station (103, 203, 903) and the mobile station (105,205,905).

5. The relay communication method of claim 3, wherein the direct communication resource and the relay communication resource are obtained by time-dividing a same frequency band.

6. The relay communication method of claim 2, wherein the frame is frequency-divided into two sub-bands.

7. The relay communication method of claim 6, wherein the sub-bands are alternately allocated to the sectors of the cell.

8. The relay communication method of claim 7, wherein each of the sub-bands is divided into a direct communication resource for direct communication between the base station (101,201,901) and the mobile station (105,205,905) and a relay communication resource for relay communication through the relay station (103, 203, 903).

9. The relay communication method of claim 8, wherein the relay communication resource is allocated for communication between the relay station (103, 203, 903) and the mobile station (105,205,905).

10. The relay communication method of claim 8, wherein the direct communication resource and the relay communication resource are obtained by time-dividing each of the sub-bands.

11. The relay communication method of claim 1, wherein the base station wirelessly communicates with the relay station using a same frequency band.

12. The relay communication method of claim 11, wherein the frame is frequency-divided into a direct communication resource for direct communication between the base station (101,201,901) and the mobile station (105,205,905) and a relay communication resource for relay communication through the relay station (103, 203, 903).

13. The relay communication method of claim 12, wherein the relay communication resource is time-divided into a BS-RS resource for communication between the base station, BS (101,201,901), and the relay station, RS (103, 203, 903), and an RS-MS resource for communication between the relay station (103, 203, 903) and the mobile station (105,205,905).

14. The relay communication method of claim 11, wherein the frame is time-divided into a direct communication resource for direct communication between the base station (101,201,901) and the mobile station (105,205,905) and a relay communication resource for relay communication through the relay station (103, 203, 903).

15. The relay communication method of claim 14, wherein the relay communication resource is time-divided into a BS-RS resource for communication between the base station (101,201,901) and the relay station (103, 203, 903) and an RS-MS resource for communication between the relay station (103, 203, 903) and the mobile station (105,205,905).

16. The relay communication method of claim 11, wherein the frame is frequency-divided into two sub-bands, and then alternately allocated to the sectors of the cell.

17. The relay communication method of claim 16, where each of the sub-bands is frequency-divided into a direct communication resource for direct communication between the base station (101,201,901) and the mobile station (105,205,905) and a relay communication resource for relay communication through the relay station (103, 203, 903).

18. The relay communication method of claim 17, wherein the relay communication resource is time-divided into a BS-RS resource for communication between the base station (101,201,901) and the relay station (103, 203, 903) and an RS-MS resource for communication between the relay station (103, 203, 903) and the mobile station (105,205,905).

19. The relay communication method of claim 16, wherein each of the sub-bands is time-divided into a direct communication resource for direct communication between the base station (101,201,901) and the mobile station (105,205,905) and a relay communication resource for relay communication through the relay station (103, 203, 903).

20. The relay communication method of claim 19, wherein the relay communication resource is time-divided into a BS-RS resource for communication between the base station (101,201,901) and the relay station (103, 203, 903) and an RS-MS resource for communication between the relay station (103, 203, 903) and the mobile station (105,205,905).

21. The relay communication method of claim 19, wherein the relay communication resource is frequency-divided into a BS-RS resource for communication between the base station (101,201,901) and the relay station (103, 203, 903) and an RS-MS resource for communication between the relay station (103, 203, 903) and the mobile station (105,205,905).

22. The relay communication method of claim 11, wherein the frame is frequency-divided into four sub-bands.

23. The relay communication method of claim 22, wherein among the four sub-bands, a first sub-band is allocated to odd sectors of the cell and used as a direct communication resource for direct communication between the base station (101,201,901) and the mobile station (105,205,905), and a second sub-band is allocated to even sectors of the cell and used as a direct communication resource for direct communication between the base station (101,201,901) and the mobile station (105,205,905).

24. The relay communication method of claim 23, wherein among the four sub-bands, a third sub-band is allocated as a relay communication resource for communication between the base station (101,201,901) and the mobile station (105,205,905) through the relay station (103, 203, 903) in odd sectors, and a fourth sub-band is allocated as a relay communication resource for communication between the base station (101,201,901) and the mobile station (105,205,905) through the relay station (103, 203, 903) in even sectors.

25. The relay communication method of claim 24, wherein the relay communication resource is used as a direct communication resource when there is no communication between the base station (101,201,901) and the mobile station (105,205,905) through the relay station (103, 203, 903) of the corresponding sector, and the allocation of the relay communication resource varies according to variation in communication between the base station (101,201,901) and the mobile station (105,205,905) through the relay station (103, 203, 903).

26. The relay communication method of claim 25, wherein the relay communication resource is time-divided into a BS-RS resource for communication between the base station (101,201,901) and the relay station (103, 203, 903) and an RS-MS resource for communication between the relay station (103, 203, 903) and the mobile station (105,205,905).

27. The relay communication method of claim 23, wherein the direct communication resource is time-divided into an inner direct communication resource allocated for direct communication in the inner area (102,202) and an outer direct communication resource allocated for direct communication in the outer area (104,204).

28. The relay communication method of claim 27, wherein among the four sub-bands, a third sub-band is allocated as a relay communication resource for communication between the base station (101,201,901) and the mobile station (105,205,905) through the relay communication in the odd sector, and a fourth sub-band is allocated as a relay communication resource for communication between the base station (101,201,901) and the mobile station (105,205,905) through the relay station (103, 203, 903) in the even sector.

29. The relay communication method of claim 28, wherein the relay communication resource is time-divided into a BS-RS resource for communication between the base station (101,201,901) and the relay station (103, 203, 903) and a relay communication resource for communication between the relay station (103, 203, 903) and the mobile station (105,205,905).

30. The relay communication method of claim 29, wherein if the relay communication resource is insufficient, a part of the outer direct communication resource is borrowed.

31. The relay communication method of claim 22, wherein among the four sub-bands, first, second, and third sub-bands are allocated to the sectors and used as direct communication resources for direct communication between the base station (101,201,901) and the mobile station (105,205,905), and a fourth sub-band is allocated as a relay communication resource for communication between the base station (101,201,901) and the mobile station (105,205,905) through the relay station (103, 203, 903) in each sector.

32. The relay communication method of claim 31, wherein the relay communication resource is time-divided into a BS-RS resource for communication between the base station (101,201,901) and the relay station (103, 203, 903) and an RS-MS resource for communication between the relay station (103, 203, 903) and the mobile station (105,205,905).

33. The relay communication method of claim 11, wherein the frame is time-divided into a direct communication resource for direct communication between the base station (101,201,901) and the mobile station (105,205,905) and a relay communication resource for relay communication through the relay station (103, 203, 903).

34. The relay communication method of claim 33, wherein the direct communication resource is allocated to each sector.

35. The relay communication method of claim 34, wherein the relay communication resource is frequency-divided into three bands and then allocated to adjacent sectors as band relay communication resources.

36. The relay communication method of claim 35, wherein each of the band relay communication resources is time-divided into a BS-RS resource for communication between the base station (101,201,901) and the relay station (103, 203, 903) and an RS-MS resource for communication between the relay station (103, 203, 903) and the mobile station (105,205,905).

37. The relay communication method of claim 11, wherein the frame is frequency-divided Into three sub-bands.

38. The relay communication method of claim 37, wherein each of the sub-bands is frequency-divided into a direct communication resource for direct communication between the base station (101,201,901) and the mobile station (105,205,905), and a relay communication resource for relay communication through the relay station (103, 203, 903).

39. The relay communication method of claim 38, wherein the direct communication resources of the sub-bands are reuse-allocated to each sector and the relay communication resources are allocated to different sectors.

40. The relay communication method of claim 39, wherein the relay communication resource is time-divided into a BS-RS resource for communication between the base station (101,201,901) and the relay station (103, 203, 903) and an RS-MS resource for communication between the relay station (103, 203, 903) and the mobile station (105,205,905).

41. The relay communication method of claim 38, wherein the direct communication resources are allocated to the different sectors for each sub-band, the relay communication resources are also allocated to the different sectors for each sub-band, and the direct communication resource and relay communication resource of different sub-bands are allocated to a same sector.

42. The relay communication method of claim 41, wherein the relay communication resource is time-divided into a BS-RS resource for communication between the base station (101,201,901) and the relay station (103, 203, 903) and an RS-MS resource for communication between the relay station (103, 203, 903) and the mobile station (105,205,905).

43. The relay communication method of claim 37, wherein each of the sub-bands is time-divided into a direct communication resource for direct communication between the base station (101,241,901) and the mobile station (105,205,905) and a relay communication resource for relay communication through the relay station (103, 203, 903).

44. The relay communication method of claim 43, wherein the direct communication resources are allocated to the different sectors for each sub-band, the relay communication resources are also allocated to the different sectors for each sub-band, and the direct communication resource and relay communication resource of different sub-bands are allocated to a same sector.

45. The relay communication method of claim 44, wherein the relay communication resource is time-divided into a BS-RS resource for communication between the base station (101,201,901) and the relay station (103, 203, 903) and an RS-MS resource for communication between the relay station (103, 203, 903) and the mobile station (105,205,905).

46. The relay communication method of claim 37, wherein each of the sub-bands is time-divided Into a high bit rate (HBR) resource for HBR data transmission and a low bit rate (LBR) resource for LBR data transmission.

47. The relay communication method of claim 46, wherein the LBR resource is frequency-divided into an inner BS-MS resource for communication between the base station (101,201,901) and the mobile station (105,205,905) in the inner area and a relay communication resource for relay communication through the relay station (103, 203, 903).

48. The relay communication method of claim 46, wherein the relay communication resource is time-divided into a BS-RS resource for communication between the base station (101,201,901) and the relay station (103, 203, 903) and an RS-MS resource for communication between the relay station (103, 203, 903) and the mobile station (105,205,905).

49. The relay communication method of claim 48, wherein the Inner BS-MS resources are allocated to the inner areas of different sectors, the relay communication resources are also allocated to the different sectors, and the inner BS-MS resources and relay communication resources of the different sub-bands are allocated to a same sector

50. The relay communication method of claim 49, wherein the LBR resource includes a sub-band resource that is allocated to the inner area and is different from an inner BS-MS resource and a relay communication resource of a corresponding sector.

51. The relay communication method of claim 11, wherein the relay station (103, 203, 903) is a fixed relay station(103, 203, 903).

52. The relay communication method of claim 11, wherein the relay station (103, 203, 903) is a mobile relay station (103, 203, 903).

53. The relay communication method of claim 11, wherein the relay station (103, 203, 903) is a mobile station (105,205,905) having a relay function.

54. The relay communication method of claim 11, wherein when both a fixed relay station (103, 203, 903) and a mobile relay station (103, 203, 903) are located in one sector, a part of a resource allocated to the fixed relay station (103, 203, 903) is allocated as a resource for relay communication through the relay station (103, 203, 903).

## Patentansprüche

1. Relais-Kommunikationsverfahren in einem OFDMA-Kommunikationssystem (orthogonal frequency division multiple access communication system), das wenigstens eine Basisstation (101, 201, 901) enthält, die einer Vielzahl von Mobilstationen (105, 205, 905) auf Rahmenbasis einen Mehrfachzugriff-Dienst bereitstellt, wobei das Verfahren die folgenden Schritte umfasst:
Teilen einer Zelle, die durch eine Sendeleistung der wenigstens einen Basisstation definiert wird, in eine Vielzahl von Sektoren;
Bereitstellen von zwei Diensten durch die Basisstation, d.h. eines ersten Dienstes, der nur in einem inneren Bereich der Zelle mit einer ersten Ausdehnung unterstützt wird, und eines zweiten Dienstes, der in einem äußeren Bereich der Zelle mit einer zweiten Ausdehnung unterstützt wird, wobei die zweite Ausdehnung größer ist als die erste Ausdehnung;
Anordnen wenigstens einer Relaisstation (103, 203, 903) in dem äußeren Bereich außerhalb des inneren Bereiches innerhalb jedes Sektors der Zelle oder an einer Zwischenzellen-Grenze zwischen benachbarten Zellen, wobei die Relaisstation den ersten Dienst auf den äußeren Bereich ausdehnt, und
Zuweisen einer Teilressource eines Rahmens für Kommunikation zwischen der Basisstation und der Mobilstation über die Relaisstation.

2. Relais-Kommunikationsverfahren nach Anspruch 1, wobei die Basisstation (101, 201, 901) mit der Relaisstation (103, 203, 903) über eine Leitung oder eine separate dedizierte Frequenz kommuniziert.

3. Relais-Kommunikationsverfahren nach Anspruch 2, wobei der Rahmen in eine Direkt-Kommunikationsressource für direkte Kommunikation zwischen der Basisstation (101, 201, 901) und der Mobilstation (105, 205, 905) und eine Relais-Kommunikationsressource für Relaiskommunikation über die Relaisstation (103, 203, 903) geteilt wird.

4. Relais-Kommunikationsverfahren nach Anspruch 3, wobei die Relais-Kommunikationsressource für Kommunikation zwischen der Relaisstation (103, 203, 903) und der Mobilstation (105, 205, 905) zugewiesen wird.

5. Relais-Kommunikationsverfahren nach Anspruch 3, wobei die Direkt-Kommunikationsressource und die Relais-Kommunikationsressource durch Zeitteilen ein und desselben Frequenzbandes gewonnen werden.

6. Relais-Kommunikationsverfahren nach Anspruch 2, wobei der Rahmen in zwei Teilbänder frequenzgeteilt wird.

7. Relais-Kommunikationsverfahren nach Anspruch 6, wobei die Teilbänder abwechselnd den Sektoren der Zelle zugewiesen werden.

8. Relais-Kommunikationsverfahren nach Anspruch 7, wobei jedes der Teilbänder in eine Direkt-Kommunikationsressource für direkte Kommunikation zwischen der Basisstation (101, 201, 901) und der Mobilstation (105, 205, 905) sowie eine Relais-Kommunikationsressource für Relais-Kommunikation über die Relaisstation (103, 203, 903) geteilt wird.

9. Relais-Kommunikationsverfahren nach Anspruch 8, wobei die Relais-Kommunikationsressource für Kommunikation zwischen der Relaisstation (103, 203, 903) und der Mobilstation (105, 205, 905) zugewiesen wird.

10. Relais-Kommunikationsverfahren nach Anspruch 8, wobei die Direkt-Kommunikationsressource und die Relais-Kommunikationsressource durch Zeitteilen jedes der Teilbänder gewonnen werden.

11. Relais-Kommunikationsverfahren nach Anspruch 1, wobei die Basisstation unter Verwendung ein und desselben Frequenzbandes drahtlos mit der Relaisstation kommuniziert.

12. Relais-Kommunikationsverhahren nach Anspruch 11, wobei der Rahmen in eine Direkt-Kommunikationsressource für direkte Kommunikation zwischen der Basisstation (101, 201, 901) und der Mobilstation (105, 205, 905) und eine Relais-Kommunikationsressource für Relais-Kommunikation über die Relaisstation (103, 203, 903) frequenzgeteilt wird.

13. Relais-Kommunikationsverfahren nach Anspruch 12, wobei die Relais-Kommunikationsressource in eine Basisstations-Relaisstations-Ressource für Kommunikation zwischen der Basisstation (101, 201, 901) und der Relaisstation (103, 203, 903) und eine Relaisstations-Mobilstations-Ressource für Kommunikation zwischen der Relaisstation (103, 203, 903) und der Mobilstation (105, 205, 905) zeitgeteilt wird.

14. Relais-Kommunikationsverfahren nach Anspruch 11, wobei der Rahmen in eine Direkt-Kommunikationsressource für direkte Kommunikation zwischen der Basisstation (101, 201, 901) und der Mobilstation (105, 205, 905) und eine Relais-Kommunikationsressource für Relais-Kommunikation über die Relaisstation (103, 203, 903) zeitgeteilt wird.

15. Relais-Kommunikationsverfahren nach Anspruch 14, wobei die Relais-Kommunikationsressource in eine Basisstations-Relaisstations-Ressource für Kommunikation zwischen der Basisstation (101, 201, 901) und der Relaisstation (103, 203, 903) und eine Reiaisstations-Mobilstations-Ressource für Kommunikation zwischen der Relaisstation (103, 203, 903) und der Mobilstation (105, 205, 905) zeitgeteilt wird.

16. Relais-Kommunikationsverfahren nach Anspruch 11, wobei der Rahmen in zwei Teilbänder frequenzgeteilt wird und dann den Sektoren der Zelle abwechselnd zugewiesen wird.

17. Relais-Kommunikationsverfahren nach Anspruch 16, wobei jedes der Teilbänder in eine Direkt-Kommunikationsressource für direkte Kommunikation zwischen der Basisstation (101, 201, 901) und der Mobilstation (105, 205, 905) und eine Relais-Kommunikationsressource für Relais-Kommunikation über die Relaisstation (103, 203, 903) frequenzgeteilt wird.

18. Relais-Kommunikationsverfahren nach Anspruch 17, wobei die Relais-Kommunikationsressource in eine Basisstations-Relaisstations-Ressource für Kommunikation zwischen der Basisstation (101, 201, 901) und der Relaisstation (103, 203, 903) und eine Relaisstations-Mobilstations-Ressource für Kommunikation zwischen der Relaisstation (103, 203, 903) und der Mobilstation (105, 205, 905) zeitgeteilt wird.

19. Relais-Kommunikationsverfahren nach Anspruch 16, wobei jedes der Teilbänder in eine Direkt-Kommunikationsressource für direkte Kommunikation zwischen der Basisstation (101, 201, 901) und der Mobilstation (105, 205, 905) und eine Relais-Kommunikationsressource für Relais-Kommunikation über die Relaisstation (103, 203, 903) zeitgeteilt wird.

20. Relais-Kommunikationsverfahren nach Anspruch 19, wobei die Relais-Kommunikationsressource in eine Basisstations-Relaisstations-Ressource für Kommunikation zwischen der Basisstation (101, 201, 901) und der Relaisstation (103, 203, 903) und eine Relaisstations-Mobilstations-Ressource für Kommunikation zwischen der Relaisstation (103, 203, 903) und der Mobilstation (105, 205, 905) zeitgeteilt wird.

21. Relais-Kommunikationsverfahren nach Anspruch 19, wobei die Relais-Kommunikationsressource in eine Basisstations-Relaisstations-Ressource für Kommunikation zwischen der Basisstation (101, 201, 901) und der Relaisstation (103, 203, 903) und eine Relaisstations-Mobilstations-Ressource für Kommunikation zwischen der Relaisstation (103, 203, 903) und der Mobilstation (105, 205, 905) frequenzgeteilt wird.

22. Relais-Kommunikationsverfahren nach Anspruch 11, wobei der Rahmen in vier Teilbänder frequenzgeteilt wird.

23. Relais-Kommunikationsverfahren nach Anspruch 22, wobei von den vier Teilbändern ein erstes Teilband ungeradzahligen Sektoren der Zelle zugewiesen und als eine Direkt-Kommunikationsressource für direkte Kommunikation zwischen der Basisstation (101, 201, 901) und der Mobilstation (105, 205, 905) verwendet wird, und ein zweites Teilband geradzahligen Sektoren der Zelle zugewiesen und als eine Direkt-Kommunikationsressource für direkte Kommunikation zwischen der Basisstation (101, 201, 901) und der Mobilstation (105, 205, 905) verwendet wird.

24. Relais-Kommunikationsverfahren nach Anspruch 23, wobei von den vier Teilbändern ein drittes Teilband als eine Relais-Kommunikationsressource für Kommunikation zwischen der Basisstation (101, 201, 901) und der Mobilstation (105, 205, 905) über die Relaisstation (103, 203, 903) in ungeradzahlingen Sektoren zugewiesen wird und ein viertes Teilband als eine Relais-Kommunikationsressource für Kommunikation zwischen der Basisstation (101, 201, 901) und der Mobilstation (105, 205, 905) über die Relaisstation (103, 203, 903) in geradzahligen Sektoren zugewiesen wird.

25. Relais-Kommunikationsverfahren nach Anspruch 24, wobei die Relais-Kommunikationsressource als eine Direkt-Kommunikationsressource verwendet wird, wenn keine Kommunikation zwischen der Basisstation (101, 201, 901) und der Mobilstation (105, 205, 905) über die Relaisstation (103, 203, 903) des entsprechenden Sektors stattfindet, und die Zuweisung der Relais-Kommunikationsressource entsprechend einer Änderung von Kommunikation zwischen der Basisstation (101, 201, 901) und der Mobilstation (105, 205, 905) über die Relaisstation (103, 203, 903) variiert.

26. Relais-Kommunikationsverfahren nach Anspruch 25, wobei die Relais-Kommunikationsressource in eine Basisstations-Relaisstations-Ressource für Kommunikation zwischen der Basisstation (101, 201, 901) und der Relaisstation (103, 203, 903) und eine Relaisstations-Mobilstations-Ressource für Kommunikation zwischen der Relaisstation (103, 203, 903) und der Mobilstation (105, 205, 905) zeitgeteilt wird.

27. Relais-Kommunikationsverfahren nach Anspruch 23, wobei die Direkt-Kommunikationsressource in eine innere Direkt-Kommunikationsressource, die für direkte Kommunikation in dem inneren Bereich (102, 202) zugewiesen wird, und eine äußere Direkt-Kommunikationsressource zeitgeteilt wird, die für direkte Kommunikation in dem äußeren Bereich (104, 204) zugewiesen wird.

28. Relais-Kommunikationsverfahren nach Anspruch 27, wobei von den vier Teilbändern ein drittes Teilband als eine Relais-Kommunikationsressource für Kommunikation zwischen der Basisstation (101, 201, 901) und der Mobilstation (105, 205, 905) über die Relais-Kommunikation in dem ungeradzahligen Sektor zugewiesen wird und ein viertes Teilband als eine Relais-Kommunikationsressource für Kommunikation zwischen der Basisstation (101, 201, 901) und der Mobilstation (105, 205, 905) über die Relaisstation (103, 203, 903) in dem geradzahligen Sektor zugewiesen wird.

29. Relais-Kommunikationsverfahren nach Anspruch 28, wobei die Relais-Kommunikationsressource in eine Basisstations-Relaisstations-Ressource für Kommunikation zwischen der Basisstation (101, 201, 901) und der Relaisstation (103, 203, 903) und eine Relais-Kommunikationsressource für Kommunikation zwischen der Relaisstation (103, 203, 903) und der Mobilstation (105, 205, 905) zeitgeteilt wird.

30. Relais-Kommunikationsverfahren nach Anspruch 29, wobei, wenn die Relais-Kommunikationsressource nicht ausreicht, ein Teil der äußeren Direkt-Kommunikationsressource geliehen wird.

31. Relais-Kommunikationsverfahren nach Anspruch 22, wobei von den vier Teilbändern ein erstes, zweites und drittes Teilband den Sektoren zugewiesen und als Direkt-Kommunikationsressourcen für direkte Kommunikation zwischen der Basisstation (101, 201, 901) und der Mobilstation (105, 205, 905) verwendet wird und ein viertes Teilband als eine Relais-Kommunikationsressource für Kommunikation zwischen der Basisstation (101, 201, 901) und der Mobilstation (105, 205, 905) über die Relaisstation (103, 203, 903) in jedem Sektor zugewiesen wird.

32. Relais-Kommunikationsverfahren nach Anspruch 31, wobei die Relais-Kommunikationsressource in eine Basisstations-Retaisstations-Ressource für Kommunikation zwischen der Basisstation (101, 201, 901) und der Relaisstation (103, 203, 903) und eine Relaisstations-Mobilstations-Ressource für Kommunikation zwischen der Relaisstation (103, 203, 903) und der Mobilstation (105, 205, 905) zeitgeteilt wird.

33. Relais-Kommunikationsverfahren nach Anspruch 11, wobei der Rahmen in eine Direkt-Kommunikationsressource für direkte Kommunikation zwischen der Basisstation (101, 201, 901) und der Mobilstation (105, 205, 905) und eine Relais-Kommunikationsressource für Relais-Kommunikation über die Relaisstation (103, 203, 903) zeitgeteilt wird.

34. Relais-Kommunikationsverfahren nach Anspruch 33, wobei die Direkt-Kommunikationsressource jedem Sektor zugewiesen wird.

35. Relais-Kommunikationsverfahren nach Anspruch 34, wobei die Relais-Kommunikationsressource in drei Bänder frequenzgeteilt wird und dann benachbarten Sektoren als Band-Relais-Kommunikationsressourcen zugewiesen wird.

36. Relais-Kommunikationsverfahren nach Anspruch 35, wobei jede der Band-Relais-Kommunikationsressourcen in eine Basisstations-Relaisstations-Ressource für Kommunikation zwischen der Basisstation (101, 201, 901) und der Relaisstation (103, 203, 903)) und eine Relaisstations-Mobilstations-Ressource für Kommunikation zwischen der Relaisstation (103, 203, 903) und der Mobilstation (105, 205, 905) zeitgeteilt wird.

37. Relais-Kommunikationsverfahren nach Anspruch 11, wobei der Rahmen in drei Teilbänder frequenzgeteilt wird.

38. Relais-Kommunikationsverfahren nach Anspruch 37, wobei jedes der Teilbänder in eine Direkt-Kommunikationsressource für direkte Kommunikation zwischen der Basisstation (101, 201, 901) und der Mobilstation (105, 205, 905) und eine Relais-Kommunikationsressource für Relais-Kommunikation über die Relaisstation (103, 203, 903) frequenzgeteilt wird.

39. Relais-Kommunikationsverfahren nach Anspruch 38, wobei die Direkt-Kommunikationsressourcen der Teilbänder jedem Sektor zur Wiederverwendung zugewiesen werden und die Relais-Kommunikationsressourcen verschiedenen Sektoren zugewiesen werden.

40. Relais-Kommunikationsverfahren nach Anspruch 39, wobei die Relais-Kommunikationsressource in eine Basisstations-Relaisstations-Ressource für Kommunikation zwischen der Basisstation (101, 201, 901) und der Relaisstation und eine Relaisstations-Mobilstations-Ressource für Kommunikation zwischen der Relaisstation (103, 203, 903) und der Mobilstation (105, 205, 905) zeitgeteilt wird.

41. Relais-Kommunikationsverfahren nach Anspruch 38, wobei die Direkt-Kommunikationsressourcen den verschiedenen Sektoren für jedes Teilband zugewiesen werden, die Relais-Kommunikationsressourcen ebenfalls den verschiedenen Sektoren für jedes Teilband zugewiesen werden und die Direkt-Kommunikationsressource sowie die Relais-Kommunikationsressource verschiedener Teilbänder ein und demselben Sektor zugewiesen werden.

42. Relais-Kommunikationsverfahren nach Anspruch 41, wobei die Relais-Kommunikationsressource in eine Basisstations-Relaisstations-Ressource für Kommunikation zwischen den Basisstation (101, 201, 901) und der Relaisstation (103, 203, 903) und eine Relaisstations-Mobilstations-Ressource für Kommunikation zwischen der Relaisstation und der Mobilstation (105, 205, 905) zeitgeteilt wird.

43. Relais-Kommunikationsverfahren nach Anspruch 37, wobei jedes der Teilbänder in eine Direkt-Kommunikationsressource für direkte Kommunikation zwischen der Basisstation (101, 201, 901) und der Mobilstation (105, 205, 905) und eine Relais-Kommunikationsressource für Relais-Kommunikation über die Relaisstation (103, 203, 903) zeitgeteilt wird.

44. Relais-Kommunikationsverfahren nach Anspruch 43, wobei die Direkt-Kommunikationsressourcen den verschiedenen Sektoren für jedes Teilband zugewiesen werden, die Relais-Kommunikationsressourcen ebenfalls den verschiedenen Sektoren für jedes Teilband zugewiesen werden und die Direkt-Kommunikationsressource sowie die Relais-Kommunikationsressource verschiedener Teilbänder ein und demselben Sektor zugewiesen werden.

45. Relais-Kommunikationsverfahren nach Anspruch 44, wobei die Relais-Kommunikationsressource in eine Basisstations-Relaisstations-Ressource für Kommunikation zwischen der Basisstation (101, 201, 901) und der Relaisstation (103, 203, 903) und eine Relaisstations-Mobilstations-Ressource für Kommunikation zwischen der Relaisstation (103, 203, 903) und der Mobilstation (105, 205, 905) zeitgeteilt wird.

46. Relais-Kommunikationsverfahren nach Anspruch 37, wobei jedes der Teilbänder in eine Ressource hoher Bitrate für Datenübertragung mit hoher Bitrate und eine Ressource niedriger Bitrate für Datenübertragung mit niedriger Bitrate zeitgeteilt wird.

47. Relais-Kommunikationsverfahren nach Anspruch 46, wobei die Ressource niedriger Bitrate in eine innere Basisstations-Mobilstations-Ressource für Kommunikation zwischen der Basisstation (101, 201, 901) und der Mobilstation (105, 205, 905) im inneren Bereich und eine Relais-Kommunikationsressource für Relais-Kommunikation über die Relaisstation (103, 203, 903) frequenzgeteilt wird.

48. Relais-Kommunikationsverfahren nach Anspruch 46, wobei die Relais-Kommunikationsressource in eine Basisstations-Relaisstations-Ressource für Kommunikation zwischen der Basisstation (101, 201, 901) und der Relaisstation (103, 203, 903) und eine Relaisstations-Mobilstations-Ressource für Kommunikation zwischen der Relaisstation (103, 203, 903) und der Mobilstation (105, 205, 905) zeitgeteilt wird.

49. Relais-Kommunikationsverfahren nach Anspruch 48, wobei die inneren Basisstations-Mobilstations-Ressourcen den inneren Bereichen verschiedener Sektoren zugewiesen werden, die Relais-Kommunikationsressourcen ebenfalls den verschiedenen Sektoren zugewiesen werden und die inneren Basisstations-Mobilstations-Ressourcen und Relais-Kommunikationsressourcen der verschiedenen Teilbänder ein und demselben Sektor zugewiesen werden.

50. Relais-Kommunikationsverfahren nach Anspruch 49, wobei die Ressource niedriger Bitrate eine Teilbandressource enthält, die dem inneren Bereich zugewiesen wird und sich von einer inneren Basisstations-Mobilstations-Ressource und einer Relais-Kommunikationsressource eines entsprechenden Sektors unterscheidet.

51. Relais-Kommunikationsverfahren nach Anspruch 11, wobei die Relaisstation (103, 203, 903) eine ortsfeste Relaisstation (103, 203, 903) ist.

52. Relais-Kommunikationsverfahren nach Anspruch 11, wobei die Relaisstation (103, 203, 903) eine mobile Relaisstation (103, 203, 903) ist.

53. Relais-Kommunikationsverfahren nach Anspruch 11, wobei die Relaisstation (103, 203, 903) eine Mobilstation (105, 205, 905) mit einer Relais-Funktion ist.

54. Relais-Kommunikationsverfahren nach Anspruch 11, wobei, wenn sich sowohl eine ortsfeste Relaisstation (103, 203, 903) als auch eine mobile Relaisstation (103, 203, 903) in einem Sektor befinden, ein Teil einer der ortsfesten Relaisstation (103, 203, 903) zugewiesenen Ressource als eine Ressource für Relais-Kommunikation über die Relaisstation (103, 203, 903) zugewiesen wird.

## Revendications

1. Procédé de communication à relais dans un système de communication à accès multiple par répartition de fréquences orthogonales, OFDMA (pour "orthogonal frequency division multiple access") comprenant au moins une station de base (101, 201, 901) destinée à fournir un service d'accès multiple à de multiples stations mobiles (105, 205, 905), trame par trame, comprenant les étapes qui consistent :
à diviser une cellule définie par une puissance d'émission de la, au moins une, station de base en de multiples secteurs ;
à fournir deux services par la station de base, un premier service supporté uniquement dans une zone intérieure de la cellule avec une première étendue et un second service supporté dans une zone extérieure de la cellule avec une seconde étendue, la seconde étendue étant plus grande que la première étendue ;
à disposer au moins une station relais (103, 203, 903) dans la zone extérieure en dehors de la zone intérieure dans chaque secteur de la cellule ou sur une limite intercellulaire entre des cellules adjacentes, ladite station relais étendant le premier service à la zone extérieure, et
à allouer une ressource partielle d'une trame pour une communication entre la station de base et la station mobile par l'intermédiaire de la station relais.

2. Procédé de communication à relais selon la revendication 1, dans lequel la station de base (101, 201, 901) communique avec la station relais (103, 203, 903) par l'intermédiaire de l'un d'un fil et d'une fréquence dédiée séparée.

3. Procédé de communication à relais selon la revendication 2, dans lequel la trame est divisée en une ressource de communication directe pour une communication directe entre la station de base (101, 201, 901) et la station mobile (105, 205, 905) et en une ressource de communication à relais pour une communication à relais par l'intermédiaire de la station relais (103, 203, 903).

4. Procédé de communication à relais selon la revendication 3, dans lequel la ressource de communication à relais est allouée à une communication entre la station relais (103, 203, 903) et la station mobile (105, 205, 905).

5. Procédé de communication à relais selon la revendication 3, dans lequel la ressource de communication directe et la ressource de communication à relais sont obtenues par répartition dans le temps d'une même bande de fréquences.

6. Procédé de communication à relais selon la revendication 2, dans lequel la trame est répartie en fréquences en deux sous-bandes.

7. Procédé de communication à relais selon la revendication 6, dans lequel les sous-bandes sont allouées alternativement aux secteurs de la cellule.

8. Procédé de communication à relais selon la revendication 7, dans lequel chacune des sous-bandes est divisée en une ressource de communication directe pour une communication directe entre la station de base (101, 201, 901) et la station mobile (105, 205, 905) et en une ressource de communication à relais pour une communication à relais par l'intermédiaire de la station relais (103, 203, 903).

9. Procédé de communication à relais selon la revendication 8, dans lequel la ressource de communication à relais est allouée pour une communication entre la station relais (103, 203, 903) et la station mobile (105, 205, 905).

10. Procédé de communication à relais selon la revendication 8, dans lequel la ressource de communication directe et la ressource de communication à relais sont obtenues par répartition dans le temps de chacune des sous-bandes.

11. Procédé de communication à relais selon la revendication 1, dans lequel la station de base communique sans fil avec la station relais en utilisant une même bande de fréquences.

12. Procédé de communication à relais selon la revendication 11, dans lequel la trame est répartie en fréquences en une ressource de communication directe pour une communication directe entre la station de base (101, 201, 901) et la station mobile (105, 205, 905) et en une ressource de communication à relais pour une communication à relais par l'intermédiaire de la station relais (103, 203, 903).

13. Procédé de communication à relais selon la revendication 12, dans lequel la ressource de communication à relais est répartie dans le temps en une ressource BS-RS pour une communication entre la station de base, BS (101, 201, 901), et la station relais, RS (103, 203, 903), et en une ressource RS-MS pour une communication entre la station relais (103, 203, 903) et la station mobile (105, 205, 905).

14. Procédé de communication à relais selon la revendication 11, dans lequel la trame est répartie dans le temps en une ressource de communication directe pour une communication directe entre la station de base (101, 201, 901) et la station mobile (105, 205, 905) et en une ressource de communication à relais pour une communication à relais par l'intermédiaire de la station relais (103, 203, 903).

15. Procédé de communication à relais selon la revendication 14, dans lequel la ressource de communication à relais est répartie dans le temps en une ressource BS-RS pour une communication entre la station de base (101, 201, 901) et la station relais (103, 203, 903) et en une ressource RS-MS pour une communication entre la station relais (103, 203, 903) et la station mobile (105, 205, 905).

16. Procédé de communication à relais selon la revendication 11, dans lequel la trame est répartie en fréquences en deux sous-bandes, puis est allouée de façon alternée aux secteurs de la cellule.

17. Procédé de communication à relais selon la revendication 16, dans lequel chacune des sous-bandes est répartie en fréquences en une ressource de communication directe pour une communication directe entre la station de base (101, 201, 901) et la station mobile (105, 205, 905) et en une ressource de communication à relais pour une communication à relais par l'intermédiaire de la station relais (103, 203, 903).

18. Procédé de communication à relais selon la revendication 17, dans lequel la ressource de communication à relais est répartie dans le temps en une ressource BS-RS pour une communication entre la station de base (101, 201, 901) et la station relais (103, 203, 903) et en une ressource RS-MS pour une communication entre la station relais (103, 203, 903) et la station mobile (105, 205, 905).

19. Procédé de communication à relais selon la revendication 16, dans lequel chacune des sous-bandes est répartie dans le temps en une ressource de communication directe pour une communication directe entre la station de base (101, 201, 901) et la station mobile (105, 205, 905) et en une ressource de communication à relais pour une communication à relais par l'intermédiaire de la station relais (103, 203, 903).

20. Procédé de communication à relais selon la revendication 19, dans lequel la ressource de communication à relais est répartie dans le temps entre une ressource BS-RS pour une communication entre la station de base (101, 201, 901) et la station relais (103, 203, 903) et en une ressource RS-MS pour une communication entre la station relais (103, 203, 903) et la station mobile (105, 205, 905).

21. Procédé de communication à relais selon la revendication 19, dans lequel la ressource de communication à relais est répartie en fréquences en une ressource BS-RS pour une communication entre la station de base (101, 201, 901) et la station relais (103, 203, 903) et en une ressource RS-MS pour une communication entre la station relais (103, 203, 903) et la station mobile (105, 205, 905).

22. Procédé de communication à relais selon la revendication 11, dans lequel la trame est répartie en fréquences en quatre sous-bandes.

23. Procédé de communication à relais selon la revendication 22, dans lequel, parmi les quatre sous-bandes, une première sous-bande est allouée à des secteurs impairs de la cellule et est utilisée en tant que ressource de communication directe pour une communication directe entre la station de base (101, 201, 901) et la station mobile (105, 205, 905), et une deuxième sous-bande est allouée à des secteurs pairs de la cellule et est utilisée en tant que ressource de communication directe pour une communication directe entre la station de base (101, 201, 901) et la station mobile (105, 205, 905).

24. Procédé de communication à relais selon la revendication 23, dans lequel, parmi les quatre sous-bandes, une troisième sous-bande est allouée en tant que ressource de communication à relais pour une communication entre la station de base (101, 201, 901) et la station mobile (105, 205, 905) par l'intermédiaire de la station relais (103, 203, 903) dans des secteurs impairs, et une quatrième sous-bande est allouée en tant que ressource de communication à relais pour une communication entre la station de base (101, 201, 901) et la station mobile (105, 205, 905) par l'intermédiaire de la station relais (103, 203, 903) dans des secteurs pairs.

25. Procédé de communication à relais selon la revendication 24, dans lequel la ressource de communication à relais est utilisée en tant que ressource de communication directe lorsqu'il n'y a pas de communication entre la station de base (101, 201, 901) et la station mobile (105, 205, 905) par l'intermédiaire de la station relais (103, 203, 903) du secteur correspondant, et l'allocation de la ressource de communication à relais varie en fonction d'une variation de la communication entre la station de base (101, 201, 901) et la station mobile (105, 205, 905) par l'intermédiaire de la station relais (103, 203, 903).

26. Procédé de communication à relais selon la revendication 25, dans lequel la ressource de communication à relais est répartie dans le temps en une ressource BS-RS pour une communication entre la station de base (101, 201, 901) et la station relais (103, 203, 903) et en une ressource RS-MS pour une communication entre la station relais (103, 203, 903) et la station mobile (105, 205, 905).

27. Procédé de communication à relais selon la revendication 23, dans lequel la ressource de communication directe est répartie dans le temps en une ressource de communication directe intérieure allouée pour une communication directe dans la zone intérieure (102, 202) et en une ressource de communication directe extérieure allouée pour une communication directe dans la zone extérieure (104, 204).

28. Procédé de communication à relais selon la revendication 27, dans lequel, parmi les quatre sous-bandes, une troisième sous-bande est allouée en tant que ressource de communication à relais pour une communication entre la station de base (101, 201, 901) et la station mobile (105, 205, 905) par l'intermédiaire de la communication à relais dans le secteur impair, et une quatrième sous-bande est allouée en tant que ressource de communication à relais pour une communication entre la station de base (101, 201, 901) et la station mobile (105, 205, 905) par l'intermédiaire de la station relais (103, 203, 903) dans le secteur pair.

29. Procédé de communication à relais selon la revendication 28, dans lequel la ressource de communication à relais est répartie dans le temps en une ressource BS-RS pour une communication entre la station de base (101, 201, 901) et la station relais (103, 203, 903) et en une ressource de communication à relais pour une communication entre la station relais (103, 203, 903) et la station mobile (105, 205, 905).

30. Procédé de communication à relais selon la revendication 29, dans lequel, si la ressource de communication à relais est insuffisante, une partie de la ressource de communication directe extérieure est empruntée.

31. Procédé de communication à relais selon la revendication 22, dans lequel, parmi les quatre sous-bandes, des première, deuxième et troisième sous-bandes sont allouées aux secteurs et utilisées en tant que ressources de communication directe pour une communication directe entre la station de base (101, 201, 901) et la station mobile (105, 205, 905), et une quatrième sous-bande est allouée en tant que ressource de communication à relais pour une communication entre la station de base (101, 201, 901) et la station mobile (105, 205, 905) par l'intermédiaire de la station relais (103, 203, 903) dans chaque secteur.

32. Procédé de communication à relais selon la revendication 31, dans lequel la ressource de communication à relais est répartie dans le temps en une ressource BS-RS pour une communication entre la station de base (101, 201, 901) et la station relais (103, 203, 903) et en une ressource RS-MS pour une communication entre la station relais (103, 203, 903) et la station mobile (105, 205, 905).

33. Procédé de communication à relais selon la revendication 11, dans lequel la trame est répartie dans le temps en une ressource de communication directe pour une communication directe entre la station de base (101, 201, 901) et la station mobile (105, 205, 905) et en une ressource de communication à relais pour une communication à relais par l'intermédiaire de la station relais (103, 203, 903).

34. Procédé de communication à relais selon la revendication 33, dans lequel la ressource de communication directe est allouée à chaque secteur.

35. Procédé de communication à relais selon la revendication 34, dans lequel la ressource de communication à relais est répartie en fréquences en trois bandes puis allouée à des secteurs adjacents en tant que ressources de communication à relais de bande.

36. Procédé de communication à relais selon la revendication 35, dans lequel chacune des ressources de communication à relais de bande est répartie dans le temps en une ressource BS-RS pour une communication entre la station de base (101, 201, 901) et la station relais (103, 203, 903) et en une ressource RS-MS pour une communication entre la station relais (103, 203, 903) et la station mobile (105, 205, 905).

37. Procédé de communication à relais selon la revendication 11, dans lequel la trame est répartie en fréquences en trois sous-bandes.

38. Procédé de communication à relais selon la revendication 37, dans lequel chacune des sous-bandes est répartie en fréquences en une ressource de communication directe pour une communication directe entre la station de base (101, 201, 901) et la station mobile (105, 205, 905), et en une ressource de communication à relais pour une communication à relais par l'intermédiaire de la station relais (103, 203, 903).

39. Procédé de communication à relais selon la revendication 38, dans lequel les ressources de communication directe des sous-bandes sont allouées pour une réutilisation à chaque secteur et les ressources de communication à relais sont allouées pour des secteurs différents.

40. Procédé de communication à relais selon la revendication 39, dans lequel la ressource de communication à relais est répartie dans le temps en une ressource BS-RS pour une communication entre la station de base (101, 201, 901) et la station relais (103, 203, 903) et en une ressource RS-MS pour une communication entre la station relais (103, 203, 903) et la station mobile (105, 205, 905).

41. Procédé de communication à relais selon la revendication 38, dans lequel les ressources de communication directe sont allouées aux différents secteurs pour chaque sous-bande, les ressources de communication à relais sont également allouées aux différents secteurs pour chaque sous-bande, et la ressource de communication directe et la ressource communication à relais de différentes sous-bandes sont allouées à un même secteur.

42. Procédé de communication à relais selon la revendication 41, dans lequel la ressource de communication à relais est répartie dans le temps en une ressource BS-RS pour une communication entre la station de base (101, 201, 901) et la station relais (103, 203, 903) et en une ressource RS-MS pour une communication entre la station relais (103, 203, 903) et la station mobile (105, 205, 905).

43. Procédé de communication à relais selon la revendication 37, dans lequel chacune des sous-bandes est répartie dans le temps en une ressource de communication directe pour une communication directe entre la station de base (101, 201, 901) et la station mobile (105, 205, 905) et en une ressource de communication à relais pour une communication à relais par l'intermédiaire de la station relais (103, 203, 903).

44. Procédé de communication à relais selon la revendication 43, dans lequel les ressources de communication directe sont allouées aux différents secteurs pour chaque sous-bande, les ressources de communication à relais sont également allouées aux différents secteurs pour chaque sous-bande, et la ressource de communication directe et la ressource de communication à relais de différentes sous-bandes sont allouées à un même secteur.

45. Procédé de communication à relais selon la revendication 44, dans lequel la ressource de communication à relais est répartie dans le temps en une ressource BS-RS pour une communication entre la station de base (101, 201, 901) et la station relais (103, 203, 903) et en une ressource RS-MS pour une communication entre la station relais (103, 203, 903) et la station mobile (105, 205, 905).

46. Procédé de communication à relais selon la revendication 37, dans lequel chacune des sous-bandes est répartie dans le temps en une ressource à débit binaire élevé (HBR pour "high bit rate") pour une transmission de données HBR et en une ressource à débit binaire bas (LBR pour "low bit rate") pour une transmission de données LBR.

47. Procédé de communication à relais selon la revendication 46, dans lequel la ressource LBR est répartie en fréquences en une ressource BS-MS intérieure pour une communication entre la station de base (101, 201, 901) et la station mobile (105, 205, 905) dans la zone intérieure et en une ressource de communication à relais pour une communication à relais par l'intermédiaire de la station relais (103, 203, 903).

48. Procédé de communication à relais selon la revendication 46, dans lequel la ressource de communication à relais est répartie dans le temps en une ressource BS-RS pour une communication entre la station de base (101, 201, 901) et la station relais (103, 203, 903) et en une ressource RS-MS pour une communication entre la station relais (103, 203, 903) et la station mobile (105, 205, 905).

49. Procédé de communication à relais selon la revendication 48, dans lequel les ressources BS-MS intérieures sont allouées aux zones intérieures de différents secteurs, les ressources de communication à relais sont également allouées aux différents secteurs, et les ressources BS-MS intérieures et les ressources de communication à relais des différentes sous-bandes sont allouées à un même secteur.

50. Procédé de communication à relais selon la revendication 49, dans lequel la ressource LBR comprend une ressource de sous-bande qui est allouée à la zone intérieure et est différente d'une ressource BS-MS intérieure et d'une ressource de communication à relais d'un secteur correspondant.

51. Procédé de communication à relais selon la revendication 11, dans lequel la station relais (103, 203, 903) est une station relais fixe (103, 203, 903).

52. Procédé de communication à relais selon la revendication 11, dans lequel la station relais (103, 203, 903) est une station relais mobile (103, 203, 903).

53. Procédé de communication à relais selon la revendication 11, dans lequel la station relais (103, 203, 903) est une station mobile (105, 205, 905) ayant une fonction de relais.

54. Procédé de communication à relais selon la revendication 11, dans lequel, lorsqu'une station relais fixe (103, 203, 903) et une station relais mobile (103, 203, 903) sont toutes deux placées dans un secteur, une partie d'une ressource allouée à la station relais fixe (103, 203, 903) est allouée en tant que ressource pour une communication à relais par l'intermédiaire de la station relais (103, 203, 903).
